(19) Europäisches Patentamt
European Patent Office
Office européen des brevets

(11) **EP 3 278 441 B1**

(12) **EUROPÄISCHE PATENTSCHRIFT**

(45) Veröffentlichungstag und Bekanntmachung des Hinweises auf die Patenterteilung:
**19.07.2023  Patentblatt 2023/29**

(21) Anmeldenummer: **16712052.6**

(22) Anmeldetag: **30.03.2016**

(51) Internationale Patentklassifikation (IPC):
**H02M 7/483** (2007.01)

(52) Gemeinsame Patentklassifikation (CPC):
**H02M 7/483; H02M 7/4835;** H02M 1/0048;
Y02B 70/10

(86) Internationale Anmeldenummer:
**PCT/EP2016/056860**

(87) Internationale Veröffentlichungsnummer:
**WO 2016/156356 (06.10.2016 Gazette 2016/40)**

(54) **VERLUSTARMER MODULARER MULTILEVELKONVERTER**

MODULAR MULTILEVEL CONVERTER WITH REDUCED LOSSES

CONVERTISSEUR MULTI-NIVEAUX A PERTES REDUITES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.04.2015  DE 102015105159**
**22.04.2015  DE 102015106196**

(43) Veröffentlichungstag der Anmeldung:
**07.02.2018  Patentblatt 2018/06**

(73) Patentinhaber: **Marquardt, Rainer, Prof. Dr.-Ing.**
**85521 Riemerling (DE)**

(72) Erfinder: **Marquardt, Rainer, Prof. Dr.-Ing.**
**85521 Riemerling (DE)**

(74) Vertreter: **Lucke, Andreas**
**Boehmert & Boehmert**
**Anwaltspartnerschaft mbB**
**Pettenkoferstrasse 22**
**80336 München (DE)**

(56) Entgegenhaltungen:
DE-A1-102010 008 978     DE-A1-102011 089 648
DE-A1-102013 205 562     DE-A1-102014 110 410
DE-B4-102010 008 978

**Beschreibung**

GEBIET DER ERFINDUNG

Die vorliegende Erfindung liegt auf dem Gebiet der Umrichter zur Umformung elektrischer Energie. Insbesondere betrifft sie einen Umrichter, der eine Mehrzahl von in Reihe geschalteter steuerbarer zweipoliger Submodule umfasst, ein zugehöriges Submodul und ein Verfahren zum Steuern eines derartigen Umrichters.

HINTERGRUND UND VERWANDTER STAND DER TECHNIK

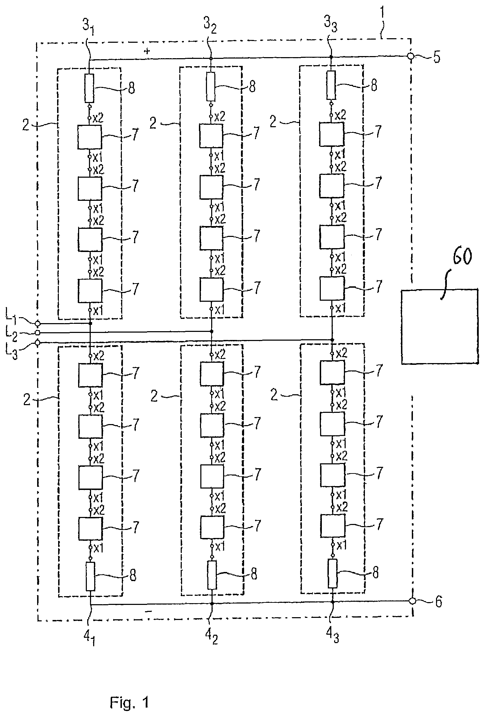

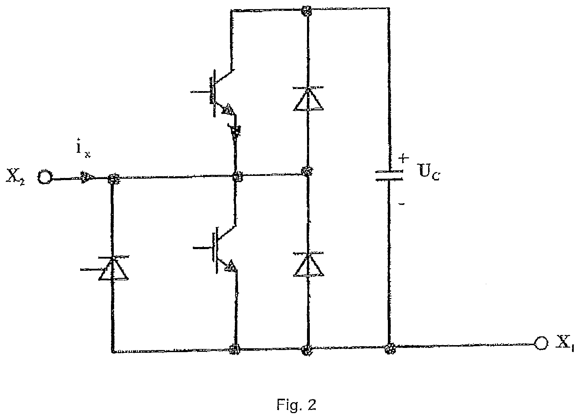

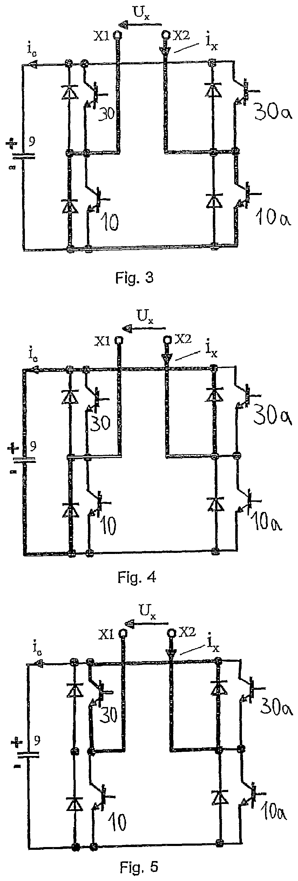

Die verlustarme Umformung elektrischer Energie mittels geeigneter leistungselektronischer Umformer gewinnt, auch für hohe Leistungen, ständig an Bedeutung. Wichtige Anwendungsgebiete sind unter anderem die Hochspannungs-Gleichstrom-Übertragung (HGÜ, englisch HVDC) und Großantriebe mit elektronischer Drehzahl/Drehmomentsteuerung. Schaltungstechnisch haben sich - seit Entwicklung gut geeigneter, abschaltbarer Leistungshalbleiterschalter - weitestgehend U-Umrichter durchgesetzt, die in der englischsprachigen Literatur als Voltage Source Converter bekannt sind.
Eine besonders vorteilhafte Variante ist in der DE 10103031 A1 offenbart und wird als modularer Multilevelkonverter bezeichnet. In Fig. 1 ist der Aufbau eines modularen Multilevelkonverters 1 aus dem Stand der Technik gezeigt, der der DE 10 2009 057 288 A1 entnommen ist. Der Umrichter 1 weist Leistungshalbleiterventile 2 bzw. -zweige auf, die in einer Brückenschaltung miteinander verbunden sind. Jedes der Leistungshalbleiterventile 2 erstreckt sich zwischen einem Wechselspannungsanschluss $L_1$, $L_2$, $L_3$ und einem Gleichspannungsanschluss $3_1$, $3_2$, $3_3$ bzw. $4_1$, $4_2$, $4_3$. Die Gleichspannungsanschlüsse $3_1$, $3_2$, $3_3$ sind über einen positiven Polanschluss 5 mit einem positiven Pol und über einen negativen Polanschluss 6 mit einem negativen Pol eines (nicht gezeigten) Gleichspannungsnetzes verbindbar.
Die Wechselspannungsanschlüsse $L_1$, $L_2$, $L_3$ sind dabei jeweils mit der Sekundärwicklung eines Transformators verbunden, dessen Primärwicklung an ein (ebenfalls nicht dargestelltes) Wechselspannungsnetz angeschlossen ist. Für jede Phase des Wechselspannungsnetzes ist ein Wechselspannungsanschluss $L_1$, $L_2$, $L_3$ vorgesehen. Der Umrichter 1 ist in dem bezeichneten Stand der Technik Teil einer Hochspannungsgleichstromübertragungsanlage und dient zur Verbindung von Wechselspannungsnetzen, um zwischen diesen hohe elektrische Leistungen zu übertragen. Ein derartiger Umrichter 1 kann aber auch Teil einer sogenannten FACTS-Anlage sein, die zur Netzstabilisierung oder Sicherung einer gewünschten Spannungsqualität dient, oder kann in der Antriebstechnik verwendet werden. Die Schalter in den einzelnen Submodulen 7 können von einer Steuereinrichtung 60 angesteuert werden. Die Steuerleitungen zwischen der Steuereinheit 60 und den einzelnen Submodulen sind in Fig. 1 der Übersichtlichkeit halber nicht gezeigt.
Wie Fig. 1 weiter zu entnehmen ist, ist der Multilevelkonverter 1 streng modular aus Submodulen 7 aufgebaut, die grundsätzlich nach außen zwei Leistungsanschlüsse bzw. Schnittstellen aufweisen. Es sind im Stand der Technik verschiedene Varianten der internen Schaltung derartiger Submodule 7 bekannt. Die einfachste Schaltungsvariante stellt das sogenannte Halbbrücken-Submodul dar, welches bereits aus der oben genannten Patentschrift DE 10103031 A1 bekannt ist und in Fig. 2 dargestellt ist. Ein derartiges Halbbrücken-Submodul weist bei vorgegebener Leistung und gleichem Halbleiteraufwand die geringste Verlustleistung auf. Der Minimierung der Verlustleistung kommt im hohen Leistungsbereich eine große wirtschaftliche und technische Bedeutung zu.
Anstelle eines Halbbrückenmoduls kann in modularen Multilevelkonvertern auch ein Vollbrücken-Submodul verwendet werden, wie es in den Fig. 3 bis 5 in verschiedenen Schaltzuständen gezeigt ist. Wie in den Fig. 3 bis 5 zu erkennen ist, enthält das Vollbrücken-Submodul vier Halbleiterschalter 10, 30, 10a und 30a, denen jeweils eine gegenläufige Freilaufdiode parallel geschaltet ist. Die Schalter 10 und 30 bilden eine erste Halbbrücke und die Schalter 10a und 30a eine zweite Halbbrücke. Jedes Vollbrücken-Submodul hat einen ersten und einen zweiten Anschluss $X_1$ bzw. $X_2$. Der Begriff "Anschluss" ist rein funktional zu verstehen und bedeutet nicht, dass das Submodul tatsächlich notwendigerweise lösbare Anschlüsse bzw. Klemmen aufweist. Das heißt, selbst wenn eine Vielzahl von Modulen dauerhaft verbunden ist, werden die Eingänge bzw. Ausgänge der einzelnen Module in der vorliegenden Offenbarung als "Anschluss" bezeichnet. Ferner umfasst das Vollbrücken-Submodul einen Kondensator als Energiespeicher.
Fig. 3 zeigt einen Fall, bei dem die Spannung $U_x$ zwischen dem zweiten und dem ersten Anschluss $X_2$, $X_1$ null ist ($U_X = 0$) und ein positiver Anschlussstrom $i_X > 0$ (technische Stromrichtung) fließt.
Fig. 4 zeigt einen Schaltzustand desselben Submoduls, der mit einer positiven Anschlussspannung $U_X > 0$ angesteuert wurde, welche - bis auf die geringe Durchlassspannung der Halbleiter - der positiven Spannung des Kondensators entspricht.
Fig. 5 zeigt wie Fig. 3 einen Zustand mit verschwindender Spannung zwischen den Anschlüssen ($U_X = 0$), der jedoch durch einen alternativen Schaltzustand der Halbleiterschalter realisiert ist. Sowohl in dem Schaltzustand von Fig. 3, als auch in dem Schaltzustand von Fig. 5 kann ein Strom $i_X$ durch das Submodul durchfließen, ohne dass der Kondensator 9 Energie aufnimmt oder abgibt. Ein vorteilhaftes Steuerverfahren für diesen Zustand könnte vorsehen, die Schaltzustände nach Fig. 3 und Fig. 5 alternierend anzusteuern, um die entstehende Durchlassverlustleistung auf alle vier Halbleiterschalter 10, 10a, 30, 30a aufzuteilen. Dadurch kann zwar die mittlere Halbleitertemperatur verringert werden, aber keine wesentliche Reduktion der Verlustleistung des Submoduls erreicht werden. Die Durchlassspannung des Submoduls entspricht in jedem Schaltzustand der Summe der Durchlassspannungen zweier Halbleiter, welche vom vollen Anschlussstrom $i_X$ durchflossen werden.

Insofern ist ersichtlich, dass die Vollbrücken-Submodule von Fig. 3 bis 5 sowohl hinsichtlich der Zahl zu verbauender Halbleiterschalter, als auch in Hinblick auf die Verlustleistung weniger vorteilhaft als das Halbbrücken-Submodul von Fig. 2 ist. Diesen Nachteilen stehen aber die folgenden Vorteile von modularen Multilevelkonvertern mit Vollbrücken-Submodulen gegenüber:

a) der Gleichstrom an den DC-Anschlüssen des Konverters kann, beispielsweise bei DC-Kurzschlüssen, elektronisch abgeschaltet werden,
b) die Gleichspannung an den DC-Anschlüssen kann stufenlos zwischen einem positiven Maximalwert und einem beitragsmäßig gleichen negativen Maximalwert verstellt werden, unabhängig von der AC-Spannung, und
c) die Kapazität der Kondensatoren in den Submodulen kann wesentlich kleiner bemessen werden, weil die prinzipbedingte Leistungspolarisation geringer ist.

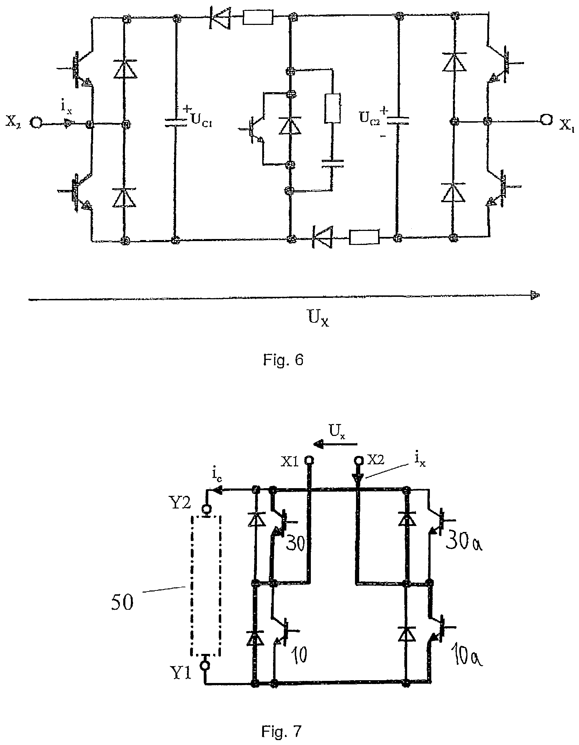

Als eine Art Zwischenlösung zwischen dem Halbbrücken- und Vollbrückensubmodul wurde in der DE 10 2009 057 288 ein Submodul vorgeschlagen, welches in Fig. 6 wiedergegeben ist. Das Submodul von Fig. 6 bietet ebenfalls den oben unter a) genannten Vorteil, dass der Gleichstrom elektronisch abgeschaltet werden kann, und gestattet im Vergleich zu Umrichtern mit Vollbrücken-Submodulen eine Verringerung der Verlustleistung um bis zu 25%. Allerdings können die oben unter b) und c) genannten Vorteile nicht erreicht werden. Eine weitere Einschränkung besteht hinsichtlich des Maximalwertes der negativen Gleichspannung, welche nur den halben Wert verglichen mit demjenigen der Vollbrücken-Submodule erreichen kann.

Eine Ergänzung des aus DE 10 2009 057 288 A1 bekannten und in Fig. 6 gezeigten Submodules durch zwei zusätzliche Halbleiterschalter ist in der folgenden Doktorarbeit des schwedischen Forschungsinstituts KTH angegeben: K. Ilves, "Modeling and Design of Modular Multilevel Converters for Grid Applications", Doctoral thesis, KTH Royal Institute of Technology, Stockholm, Sweden, TRITA-EE 2014:045, ISSN 1653-5146, urn:nbn:se:kth:diva-153762.

Die in der oben genannten Doktorarbeit als "Semi-Fullbridge submodule" bezeichnete Version ermöglicht es im Wesentlichen, das Kriterium b) zu erfüllen. Es besteht jedoch weiterhin eine Einschränkung bezüglich des erreichbaren Maximalwertes der negativen Gleichspannung, welche weiterhin nur den Wert nach DE 10 2009 057 288 A1 bzw. Fig. 6 erreicht. Des Weiteren bestehen Nachteile im Hinblick auf das Kriterium c), weil Schaltzustände mit direkter Parallelschaltung der zwei im selben Submodul vorhandenen Speicherkondensatoren nur sehr eingeschränkt zulässig sind. Eine direkte Parallelschaltung derartiger Kondensatoren führt, wie dem Fachmann bekannt ist, bei hohen Spannungen zu kurzschlussartigen Ausgleichsströmen und prinzipbedingten Energieverlusten.

Die DE 10 2013 205 562 offenbart eine Energiespeichereinrichtung, welche zum Bereitstellen und/oder Aufnehmen elektrischer Energie in Form eines n-phasigen Stroms und einer n-phasigen Spannung ausgelegt ist, wobei n ≥ 1. Die Energiespeichereinrichtung umfasst n Energieversorgungszweige, wobei jeder der Energieversorgungszweige eine Vielzahl von in Serie geschalteten Energiespeichermodulen aufweist. Die Energiespeichermodulen umfassen jeweils ein Energiespeicherzellenkoppelmodul mit Koppelmodulanschlüssen, und eine Koppeleinrichtung mit Koppelelementen, welche dazu ausgelegt sind, das Energiespeicherzellenmodul über die Koppelmodulanschlüsse selektiv in den jeweiligen Energieversorgungszweig zu schalten oder in dem jeweiligen Energieversorgungszweig zu umgehen. Jedes der Energiespeicherzellenkoppelmodule weist wiederum einen Koppelmodulstrang mit einer Vielzahl von in Serie geschalteten Energiespeicherzellenzweigmodulen auf, welche einen Energiespeicherzellenzweig mit einer Serienschaltung aus einem Energiespeicherzellenzweigkoppelelement und mindestens einer Energiespeicherzelle und ein parallel zu dem Energiespeicherzellenzweig geschaltetes Umgehungszweigkoppelelement aufweisen.

DE 10 2010 008 978 A1 offenbart eine Schaltungsanordnung für einen modularen Antriebsstromrichter, der der bidirektionalen Umwandlung von Gleichspannung, typischerweise einer Batterie, in eine frequenzvariable Drehspannung eines Drehspannungssystems gestattet. Der Umrichter ist aus mehreren baugleichen vierpoligen Modulen aufgebaut, wobei die vier Pole durch zwei gleichstromseitige Klemmen und zwei wechselstromseitige Klemmen gebildet sind. Die Module sind über ihre Gleichstromklemmen in Reihe geschaltet, wobei die erste Klemme des ersten Moduls und die zweite Klemme des letzten Moduls mit der Gleichspannungsversorgung verbunden ist. Die wechselstromseitigen Klemmen bilden die Phasen des Drehspannungssystems. Die Module sind so ausgeführt, dass der über wenige Taktzyklen gemittelte Zeitverlauf der Spannung an den gleichstromseitigen Klemmen jedes Moduls so gesteuert werden kann, dass er proportional zu der Leistung ist, die an den wechselstromseitigen Klemmen abgegeben oder aufgenommen wird. Dies hat zur Folge, dass ein Speicherkondensator, der in jedem Modul vorgesehen ist, nur den vergleichsweise geringen Energiebedarf zwischen einzelnen Taktzyklen der Taktfrequenz ausgleichen muss und sich somit die Spannungen der gleichstromseitigen Klemmen aller Module zum Spannungswert der Gleichspannungsversorgung aufsummieren.

ZUSAMMENFASSUNG DER ERFINDUNG

Der vorliegenden Erfindung liegt die Aufgabe zugrunde, einen Umrichter anzugeben, der die uneingeschränkte Funktionalität in den genannten drei Kriterien a), b) und c) bereitstellt, wie ein Multilevelkonverter mit Vollbrücken Submodulen, gleichzeitig aber eine Reduktion der Verlustleistung gestattet.

Diese Aufgabe wird gelöst durch einen Umrichter nach Anspruch 3, ein zugehöriges Modul bzw. Submodul nach Anspruch 1 und ein zugehöriges Steuerverfahren nach Anspruch 15 gelöst. Vorteilhafte Weiterbildungen sind in den abhängigen Ansprüchen angegeben.

Der erfindungsgemäße Umrichter umfasst, wie von Multilevelkonvertern bekannt, ist eine Mehrzahl von in Reihe geschalteten steuerbaren zweipoligen Submodulen, wobei zumindest ein Teil der genannten Submodule jeweils Folgendes umfasst:

- einen ersten und einen zweiten Submodulanschluss,
- einen ersten, einen zweiten, einen dritten und einen vierten steuerbaren Schalter, und
- einen ersten Speicherzweipol, welcher einen ersten und einen zweiten Zweipolanschluss, einen Energiespeicher und eine steuerbare Schalteinrichtung umfasst, wobei die steuerbare Schalteinrichtung

  • einen ersten ansteuerbaren Schaltzustand aufweist, in welchem der erste Speicherzweipol unabhängig von einer Spannung, die zwischen dem ersten und dem zweiten Speicherzweipolanschluss anliegt, keine Energie abgibt, und
  • einen zweiten ansteuerbaren Schaltzustand aufweist, in welchem der Speicher des ersten Speicherzweipols Energie aufnehmen oder abgeben kann,

  wobei das Modul als Ganzes einen ansteuerbaren Durchleitungszustand hat, in dem

  - die steuerbare Schalteinrichtung des ersten Speicherzweipols den genannten ersten Schaltzustand einnimmt, und
  - die ersten bis vierten Schalter so geschaltet sind, dass ein Strom auf zwei parallelen Zweigen durch das Modul fließt,

  wobei das Modul weiter einen oder mehrere der folgenden vier ansteuerbaren Energieabgabe- oder -aufnahmezustände hat, in denen jeweils die steuerbare Schalteinrichtung des ersten Speicherzweipols den genannten zweiten Schaltzustand einnimmt, und

  1. die Spannung zwischen dem zweiten und dem ersten Modulanschluss positiv ist und der Speicher des ersten Speicherzweipols geladen wird, oder
  2. die Spannung zwischen dem zweiten und dem ersten Modulanschluss positiv ist und der Speicher des ersten Speicherzweipols entladen wird, oder
  3. die Spannung zwischen dem zweiten und dem ersten Modulanschluss negativ ist und der Speicher des ersten Speicherzweipols entladen wird, oder
  4. die Spannung zwischen dem zweiten und dem ersten Modulanschluss negativ ist und der Speicher des ersten Speicherzweipols geladen wird.

Der erfindungsgemäße Umrichter umfasst eine Mehrzahl von in Reihe geschalteten steuerbaren zweipoligen Submodulen, wobei zumindest ein Teil der genannten Submodule durch Module der vorstehend beschriebenen Art gebildet ist, und einen ersten und einen zweiten Submodulanschluss aufweisen, die durch den ersten und den zweiten Modulanschluss des Moduls von Anspruch 1 gebildet sind, wobei der Umrichter ferner eine Steuereinheit umfasst, die zum Steuern der Schalter und der Schalteinrichtung des ersten Speicherzweipols von Submodulen eingerichtet ist, wobei die Steuereinheit dazu eingerichtet ist, ausgewählte Submodule wahlweise in den Durchleitungszustand zu schalten.

Bei dem "ersten" Speicherzweipol kann es sich um den einzigen Speicherzweipol des Submoduls handeln. Es sind aber auch bevorzugte Weiterbildungen möglich, die mindestens zwei solcher Speicherzweipole enthalten, wie unten näher erläutert wird. Um eine eindeutige Nomenklatur zu erhalten, wird daher auch ein einziger vorhandener Speicherzweipol als "erster Speicherzweipol" bezeichnet.

Vorzugsweise haben die erfindungsgemäßen Submodule nur die genannten zwei Anschlüsse. In den bevorzugten Ausführungsformen ist es nicht beabsichtigt, die Energiespeicher unterschiedlicher Submodule parallel zu schalten, wofür vier Submodulanschlüsse notwendig wären.

Dabei hat das Submodul als Ganzes einen ansteuerbaren Durchleitungszustand, in dem

- die steuerbare Schalteinrichtung des Speicherzweipols den genannten ersten Schaltzustand einnimmt, und
- die ersten bis vierten Schalter so geschaltet sind, dass ein Strom auf zwei parallelen Zweigen durch das Submodul fließen kann.

Der Durchleitungszustand tritt funktionell an die Stelle der Schaltzustände von Fig. 3 und Fig. 5, die alternativ angesteuert werden können. In beiden Fällen fließt der gesamte Strom durch zwei Schalter, genauer gesagt durch einen Schalter und durch eine einem Schalter parallel geschaltete Freilaufdiode. Allerdings unterscheiden sich die Durchlassspannungen der Dioden im Allgemeinen nicht erheblich von denen der steuerbaren Halbleiterschalter. Ähnliches gilt für Abwandlungen, bei denen die Halbleiterschalter selbst rückwärts leitend sind. Dies bedeutet, dass die Verluste in beiden Durchflussrichtungen stets ähnlich hoch sind. Aus diesem Grund wird zum Zwecke einer einfacheren Beschreibung unter dem "Schalter" entweder ein rückwärts leitender Schalter oder *pars pro toto* eine Einheit aus nicht rückwärts leitendem Schalter und parallel geschalteter gegensinniger Freilaufdiode verstanden.

Bei dem Umrichter der Erfindung hingegen kann das Submodul als Ganzes den genannten ansteuerbaren Durchleitungszustand einnehmen, in dem die Schalter so geschaltet sind, dass der Strom auf zwei parallelen Zweigen durch das Submodul fließen kann, wobei jeder der beiden Zweige dann insbesondere zwei Schalter enthält. Bei Halbleitern mit einer Ohm'schen Durchlass-Kennlinie, wie zum Beispiel bei Feldeffekt-Transistoren, führt dies zu einer besonders deutlichen Verlustleistungsreduktion: Die Verlustleistung des Submodules reduziert sich in diesem Schaltzustand um 50 % gegenüber jedem der Schaltzustände von Fig. 3 und Fig. 5. Für die typische Durchlass-Kennlinie von IGBT-Transistoren ergibt sich ein etwas geringerer Vorteil, der von der konkreten, nicht-linearen der Durchlasskennlinie bestimmt wird, aber jedenfalls noch ein sehr erheblicher Effizienzgewinn.

Man beachte, dass der beschriebene Durchlass-Schaltzustand mit dem herkömmlichen Vollbrücken-Submodul von Fig. 3 bis 5 nicht möglich ist, da dann der Kondensator kurzgeschlossen würde. Abweichend hiervon sieht die Erfindung einen Speicherzweipol mit Energiespeicher und einer steuerbaren Schalteinrichtung vor, die den genannten ersten ansteuerbaren Schaltzustand aufweist, in welchem der Zweipol unabhängig von einer Spannung, die zwischen dem ersten und dem zweiten Speicherzweipolanschluss anliegt, keine Energie abgibt, sodass der genannte ansteuerbare Durchleitungszustand mit zwei parallelen Stromzweigen erreicht werden kann. Der erste Schaltzustand des Speicherzweipols muss dabei nicht ausschließen, dass der Speicherzweipol Energie aufnimmt, d.h. geladen wird. Der Speicher des Speicherzweipols muss also nicht vollständig vom Rest des Submoduls entkoppelt werden. Es reicht für die Zwecke der Erfindung aus, dass ein Entladestrom des Speicherzweipols im ersten Schaltzustand verhindert wird.

Man beachte, dass der Fachmann gleichwohl von dieser Maßnahme zunächst keine Reduktion der Netto-Verlustleistung im Betrieb erwarten würde, weil die beschriebene Verringerung der Verlustleistung sich ja nur auf einen der Schaltzustände bezieht, nämlich auf einen Schaltzustand, in dem Strom durch das Submodul fließt und zwischen den Anschlüssen des Submoduls keine Spannung anliegt ($U_X = 0$) (wenn man den geringen Spannungsabfall an den Schaltern vernachlässigt). In sämtlichen Schaltzuständen, in denen der Speicher des Speichermoduls wahlweise Energie aufnimmt oder abgibt, führen die Schalter der Schalteinrichtung des Speicherzweipols zusätzliche Verluste ein, die es bei dem einfachen Vollbrücken-Submodul von Fig. 3 bis 5 nicht gibt. Der Fachmann würde also zunächst nicht erwarten, dass er unter dem Strich nennenswert Leistung einsparen kann, und würde zudem die Kosten für die zusätzliche Schalteinrichtung und die erhöhte Komplexität der Steuerung scheuen. Tatsächlich gingen die Entwicklungen im Stand der Technik zum Zwecke der Verringerung von Verlustleistungen auch in eine andere Richtung, wie sie in der oben genannten DE 10 2009 057 288 A1 bzw. der oben zitierten Doktorarbeit von K. Ilves beschrieben ist.

Ferner ist zu beachten, dass Vollbrücken-Schaltungen wenn sie nicht - wie in der vorliegenden Erfindung - als Submodule eines modularen Multilevelkonverters eingesetzt werden, herkömmlicherweise zu den folgenden zwei Zwecken eingesetzt und betrieben werden:

I. Zur Übertragung von Wirkleistung. Dann ist eine DC-seitige Einspeisequelle oder energieaufnahmefähige Last parallel zum Kondensator angeschlossen und notwendig,

II. zur Kompensation von (ausschließlich) Blindleistungen. In diesem Fall ist eine DC-seitige Einspeisequelle parallel zum Kondensator nicht notwendig, jedoch ist auch keine Übertragung von Wirkleistungen möglich.

Die Verwendung eines erfindungsgemäßen Speicherzweipols wird daher in den herkömmlichen Anwendungen von Vollbrückenschaltungen zur Reduktion der Verlustleistung nicht hilfreich sein, und wurde daher auch nach Kenntnis des Erfinders folgerichtig im Stand der Technik nicht in Erwägung gezogen. Denn im erstgenannten Fall I sind - aufgrund der Übertragung von Wirkleistungen - die Grundschwingungen der ausgangsseitigen, d.h. ACseitigen Strömen und Spannungen weitgehend in Phase. Zeitabschnitte mit betragsmäßig hohem Ausgangsstrom fallen dadurch mit den Zeitabschnitten betragsmäßig hoher Ausgangsspannung zusammen. Letztere muss durch einen hohen zeitlichen Anteil der Schaltzustände mit $U_X = +U_C$ (bzw. $U_X = -U_C$ in der negativen Halbwelle) und einem relativ geringen Anteil der Schaltzustände mit $U_X = 0$ realisiert werden, wobei Uc der Spannung des Speicherkondensator entspricht. Es wäre demnach nicht zielführend, die Durchlassspannung wie im Rahmen der Erfindung nur in den Schaltzuständen mit $U_X$

= 0 zu reduzieren. Des Weiteren würde die DC-seitige Einspeisequelle, wie oben bereits erwähnt, in diesen Schaltzuständen kurzgeschlossen.

In dem zweitgenannten Fall II sind die Grundschwingungen der ausgangsseitigen (ACseitigen) Ströme und Spannungen näherungsweise um 90° gegeneinander phasenverschoben. Bekannte Einsatzfälle der Vollbrücke sind hier Blindleistungs-Kompensations-Anlagen, die in der englischen Literatur als STATCOM bezeichnet werden, welche keinerlei Wirkleistungsanteile übertragen können. Auch hier treffen Zeitabschnitte mit betragsmäßig hohem Ausgangsstrom mit Zeitabschnitten mit betragsmäßig hoher Ausgangsspannung zusammen, jedoch treten zumindest die absoluten Spitzenwerte von Strom und Spannung nicht mehr simultan auf, was die Problematik zumindest quantitativ etwas mildert. Auch hier wäre eine Verwendung eines Speicherzweipols gemäß der Erfindung nicht angezeigt.

Entgegen dieser Vorurteile im Stand der Technik zeigt es sich aber überraschenderweise, dass die Leistungsverluste unter den speziellen Randbedingungen, wie sie sich konkret für ein Submodul in einem modularen Multilevelkonverter ergeben, gleichwohl insgesamt in bemerkenswertem Ausmaß reduziert werden können. Dies erschließt sich erst nach umfassender Analyse und tiefergehendem Verständnis der Randbedingungen, welche speziell in einem modularen Multilevelkonverter gelten, und wird im Zusammenhang mit der Beschreibung der bevorzugten Ausführungsbeispiele näher im Detail erläutert. Es zeigt sich, dass bei Verwendung der erfindungsgemäßen Submodule in einer Multilevelkonverter-Struktur nicht nur sämtliche der drei oben genannten Kriterien a), b) und c) erfüllt werden können, sondern die Verlustleistung auch wesentlich geringer gehalten werden kann als bei einer herkömmlichen Vollbrücke nach Fig. 3 bis 5, und sogar geringer als bei der Verwendung des Submoduls aus DE 10 2009 057 288 (Fig. 6), und dies zudem mit einem je nach Ausgestaltung des Speicherzweipols potentiell geringeren konstruktionellen Aufwand.

In einer vorteilhaften Weiterbildung umfasst der Umrichter eine Steuereinheit, die zum Steuern der Schalter des Submoduls und der Schalteinrichtung des ersten Speicherzweipols eingerichtet ist, wobei die Steuereinheit dazu eingerichtet ist, ausgewählte Submodule wahlweise in den Durchleitungszustand zu schalten.

Das Submodul hat einen oder mehrere der folgenden vier ansteuerbaren Energieabgabe- oder aufnahmezustände, in denen jeweils die steuerbare Schalteinrichtung des ersten Speicherzweipols den genannten zweiten Schaltzustand einnimmt, und

1. die Spannung zwischen dem zweiten und dem ersten Submodulanschluss positiv ist und der Speicher des ersten Speicherzweipols geladen wird, oder
2. die Spannung zwischen dem zweiten und dem ersten Submodulanschluss positiv ist und der Speicher des ersten Speicherzweipols entladen wird, oder
3. die Spannung zwischen dem zweiten und dem ersten Submodulanschluss negativ ist und der Speicher des ersten Speicherzweipols entladen wird, oder
4. die Spannung zwischen dem zweiten und dem ersten Submodulanschluss negativ ist und der Speicher des ersten Speicherzweipols geladen wird.

In einer bevorzugten Ausführungsform sind der erste und der zweite Schalter in Reihe geschaltet, und sind der dritte und der vierte Schalter in Reihe geschaltet. Der erste und der zweite Schalter bilden dabei eine erste Halbbrücke, und der dritte und der vierte Schalter eine zweite Halbbrücke. Die erste und die zweite Halbbrücke sind dann mit dem ersten Speicherzweipol parallelgeschaltet.

Vorzugsweise ist ein Potentialpunkt zwischen dem ersten und zweiten Schalter mit dem ersten Submodulanschluss verbunden, und ein Potentialpunkt zwischen dem dritten und dem vierten Schalter mit dem zweiten Submodulanschluss verbunden. Dabei sind der erste und der zweite Schalter vorzugsweise bezüglich ihrer Durchlassrichtung gleichsinnig orientiert, und der dritte und der vierte Schalter bezüglich ihrer Durchlassrichtung gleichsinnig orientiert. Vorzugsweise sind der erste und der zweite Schalter bezüglich ihrer Durchlassrichtung gegensinnig zu dem dritten und vierten Schalter orientiert.

In einer vorteilhaften Weiterbildung umfasst zumindest ein Teil der genannten Submodule weiter Folgendes:

einen fünften, einen sechsten, einen siebten und einen achten steuerbaren Schalter, wobei der fünfte ansteuerbare Schalter dem vierten ansteuerbaren Schalter direkt parallel geschaltet ist und optional entfallen kann, und
einen zweiten Speicherzweipol, welcher einen ersten und einen zweiten Zweipolanschluss, einen Energiespeicher und eine steuerbare Schalteinrichtung umfasst, wobei die steuerbare Schalteinrichtung

- einen ersten ansteuerbaren Schaltzustand aufweist, in welchem der zweite Speicherzweipol unabhängig von einer Spannung, die zwischen seinem ersten und seinem zweiten Speicherzweipolanschluss anliegt, keine Energie abgibt, und
- einen zweiten ansteuerbaren Schaltzustand aufweist, in welchem der Speicher des zweiten Speicherzweipols Energie aufnehmen oder abgeben kann,
wobei das Submodul als Ganzes einen ansteuerbaren Durchleitungszustand hat, in dem

- die steuerbare Schalteinrichtung des ersten und des zweiten Speicherzweipols den genannten ersten Schaltzustand einnehmen, und
- die ersten bis achten Schalter so geschaltet sind, dass ein Strom auf zwei parallelen Zweigen durch das Submodul fließt.

Ein derartiges Submodul mit mindestens zwei Speicherzweipolen und mindestens acht bzw. sieben (wenn der fünfte Schalter entfällt) steuerbaren Schaltern gestattet gegenüber der einfachen Variante mit lediglich einem Speicherzweipol, eine weitere Verlusteinsparung von typischerweise 20 bis 25%, und weist dabei außer einer geringeren negativen Maximalspannung keinerlei technisch bedeutende Einschränkungen der Funktion auf.

Dabei sind vorzugsweise der fünfte und der sechste Schalter in Reihe geschaltet, der siebte und der achte Schalter in Reihe geschaltet, und die Reihenschaltung aus dem fünften und dem sechsten Schalter, die Reihenschaltung aus dem siebten und dem achten Schalter und der zweite Speicherzweipol parallel geschaltet. Wenn der fünfte Schalter entfällt, tritt in der vorliegenden Offenbarung der vierte Schalter an die Stelle des fünften Schalters

In einer vorteilhaften Weiterbildung ist ein Potential zwischen dem ersten und dem zweiten Schalter mit dem ersten Submodulanschluss verbunden, ein Potentialpunkt zwischen dem dritten und dem vierten Schalter mit dem ersten Anschluss des zweiten Speicherzweipols verbunden, ein Potentialpunkt zwischen dem fünften und dem sechsten Schalter mit dem zweiten Anschluss des ersten Speicherzweipols verbunden, und ein Potentialpunkt zwischen dem siebten und dem achten Schalter mit dem zweiten Submodulanschluss verbunden.

Vorzugsweise sind in der fünfte und der sechste Schalter bezüglich ihrer Durchlassrichtung gleichsinnig orientiert und der siebte und der achte Schalter bezüglich ihrer Durchlassrichtung gleichsinnig orientiert. Ferner sind der fünfte und der sechste Schalter vorzugsweise bezüglich ihrer Durchlassrichtung gegensinnig zu dem siebten und dem achten Schalter orientiert.

In einer vorteilhaften Ausführungsform sind einer oder mehrere der ersten bis vierten Schalter durch Leistungshalbleiter gebildet, insbesondere durch IGBTs oder Thyristoren, insbesondere GTO-Thyristoren. Vorzugsweise ist bzw. sind einer oder mehrere der ersten bis vierten Schalter durch rückwärtsleitende Leistungshalbleiter gebildet. Alternativ können einer oder mehrere der ersten bis vierten Schalter eine gegensinnig parallelgeschalte Freilaufdiode haben. Dies wird unten anhand von Ausführungsbeispielen näher gezeigt.

In einer vorteilhaften Weiterbildung ist die Steuereinheit dazu eingerichtet, einen Schalter auch in Schaltzuständen, in denen ein Stromfluss gegenläufig zu diesem Schalter ist, leitend zu schalten. Dadurch kann die Durchlassspannung insbesondere bei Feldeffekttransistoren (FETs) weiter reduziert werden In einer vorteilhaften Weiterbildung umfasst der Umrichter mehrere Zweige bzw. Ventile aus in Reihe geschalteten Submodulen, wobei jeder Zweig mindestens 3, vorzugsweise mindestens 6 der genannten Submodule aufweist. In vielen praktischen Anwendungen enthält ein Zweig des modularen Multilevelkonverters jedoch mehr als 50, mehr als 100 oder sogar mehrere Hundert solcher Submodule.

In einer vorteilhaften Weiterbildung umfasst der Speicher des Speicherzweipols mindestens einen Kondensator, insbesondere einen unipolaren Kondensator. Vorzugsweise umfasst der Speicher dabei mindestens zwei Kondensatoren, die in Reihe geschaltet oder in Reihe schaltbar sind. Insbesondere sind dabei die mindestens zwei Kondensatoren zum Laden parallel und zum Entladen in Reihe schaltbar. In einer vorteilhaften Weiterbildung umfasst die Schalteinrichtung des Speicherzweipols mindestens einen Halbleiterschalter, dessen prozentuale Verlustleistung geringer ist als diejenige der ersten bis vierten Schalters. Dies ist möglich, da speziell in modularen Multilevelkonverter-Anwendungen die Ströme, die in den Schaltern der Schalteinrichtung des Speicherzweipols fließen, wesentlich geringer sein werden, als die Ströme, die beispielsweise im Durchleitungszustand durch die einzelnen Submodule fließen. Dies eröffnet die Möglichkeit, für die Schalteinrichtung des Speicherzweipols besonders verlustarme Halbleiterschalter zu verwenden, insbesondere SiC-Schalter oder GaN-Schalter.

BESCHREIBUNG DER FIGUREN

Fig. 1       zeigt einen schematischen Aufbau einer modularen Multilevelkonverter Struktur,
Fig. 2       zeigt ein Submodul mit einer Halbbrückenschaltung,
Fig. 3-5     zeigen ein Vollbrücken-Submodul in verschiedenen Schaltzuständen,
Fig. 6       zeigt ein Submodul aus dem Stand der Technik, welches zur Verringerung der Verlustleistung bestimmt ist,
Fig. 7-10    zeigen ein Submodul nach einer Ausführungsform der Erfindung in verschiedenen Schaltzuständen,

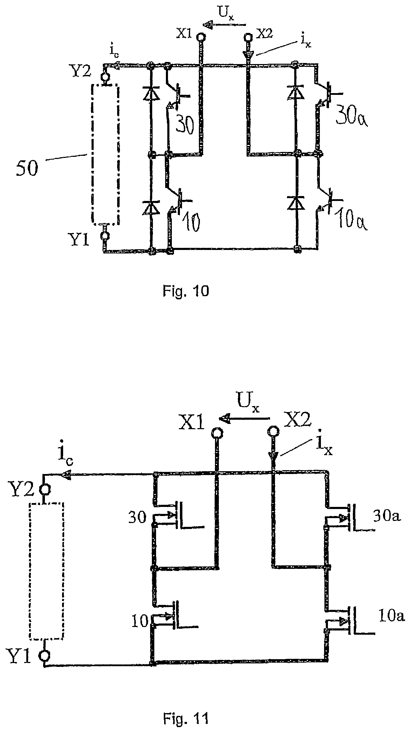

Fig. 11-12   zeigen ein Submodul nach einer anderen Ausführungsform der Erfindung in verschiedenen Schaltzuständen,

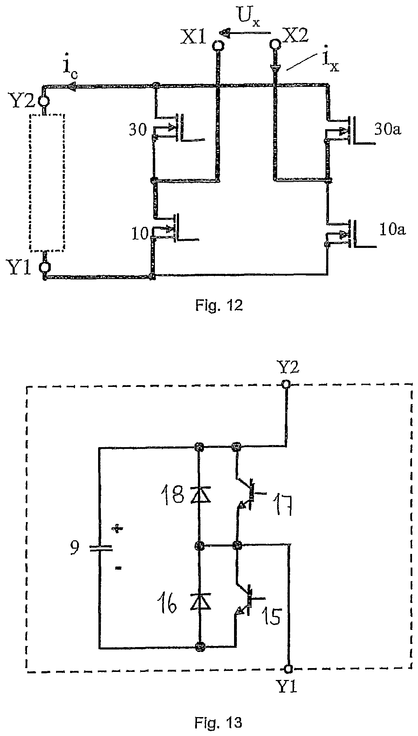

Fig. 13-17   zeigen Ausführungsformen eines Speicherzweipols,

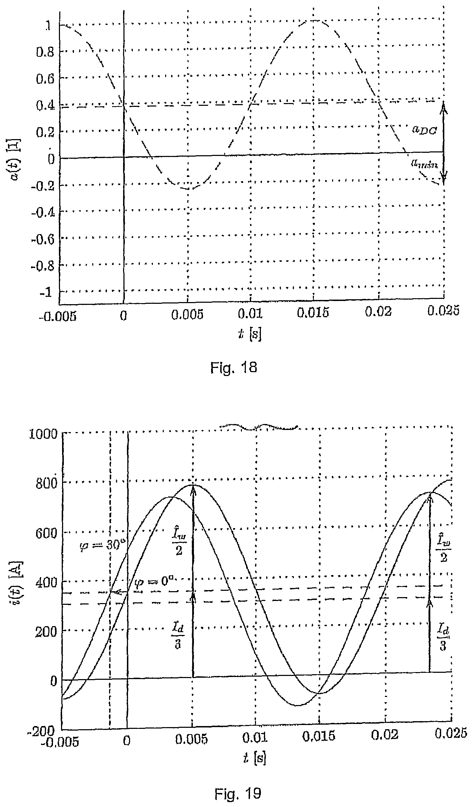

Fig. 18      zeigt einen typischen Aussteuergrad der Zweigspannung eines modularen Multilevelkonverters,

Fig. 19    zeigt den zeitlichen Verlauf des dem Aussteuergrad von Fig. 18 zugehörigen Zweigstroms,

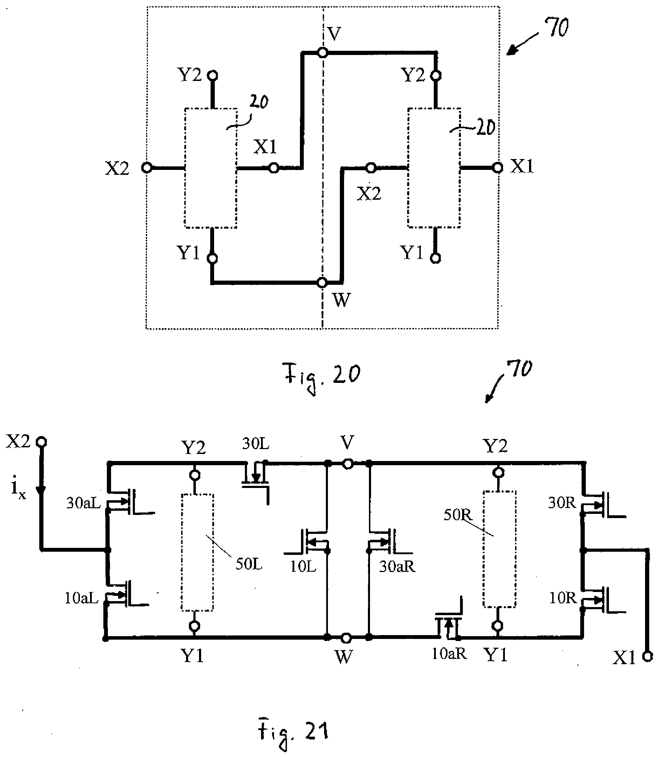

Fig. 20    zeigt schematisch die Verschaltung zweier Submodule nach einer der Figuren 7-12, die miteinander verschaltet sind, um ein erweitertes Submodul zu bilden, und

Fig. 21    zeigt eine konkrete Ausgestaltung eines erweiterten Submoduls.

BESCHREIBUNG DER BEVORZUGTEN AUSFÜHRUNGSFORMEN

Zum besseren Verständnis der vorliegenden Erfindung wird im Folgenden auf das in den Zeichnungen dargestellte bevorzugte Ausführungsbeispiel Bezug genommen, das anhand spezifischer Terminologie beschrieben ist. Es sei jedoch darauf hingewiesen, dass der Schutzumfang der Erfindung dadurch nicht eingeschränkt werden soll, da derartige Veränderungen und weitere Modifizierungen an der gezeigten Vorrichtung und dem Verfahren sowie derartige weitere Anwendungen der Erfindung, wie sie darin aufgezeigt sind, als übliches derzeitiges oder künftiges Fachwissen eines zuständigen Fachmanns angesehen werden.

Fig. 7 zeigt ein Ausführungsbeispiel eines Submodules 20 für einen Umrichter nach einer Ausführungsform der Erfindung. Das erfindungsgemäße Submodul kann auf dieselbe Weise in einer modularen Multilevel-Konverter-Topologie eingesetzt werden, wie sie in Fig. 1 gezeigt ist, und mithin an die Stelle der Submodule 7 treten. Das Submodul 20 umfasst einen ersten und einen zweiten Submodulanschluss X1, X2, einen ersten steuerbaren Schalter 10, einen zweiten steuerbaren Schalter 30, einen dritten steuerbaren Schalter 10a und einen vierten steuerbaren Schalter 30a, die in dem gezeigten Ausführungsbeispiel durch Leistungshalbleiter gebildet werden. In der gezeigten Ausführungsform sind die ersten bis vierten steuerbaren Schalter 10 bis 30a nicht rückwärtsleitend. Jedem der ersten bis vierten Schalter 10 bis 30a ist jedoch eine Freilaufdiode gegensinnig parallelgeschaltet. Schließlich umfasst das Submodul 20 einen Speicherzweipol 50, der einen ersten und einen zweiten Zweipolanschluss Y1, Y2 aufweist.

Verschiedene Ausgestaltungen eines solchen Speicherzweipols 50 sind in Fig. 13 bis 17 gezeigt und werden unten beschrieben. Allen diesen Ausführungsformen des Speicherzweipols ist aber gemein, dass sie einen Energiespeicher, der in den später gezeigten Ausführungsbeispielen durch einen oder mehrere Kondensatoren gebildet ist, und eine steuerbare Schalteinrichtung umfassen, und dass die steuerbare Schalteinrichtung

- einen ersten ansteuerbaren Schaltzustand aufweist, in welchem der Speicherzweipol unabhängig von einer Spannung, die zwischen dem ersten und dem zweiten Speicherzweipolanschluss anliegt, keine Energie abgibt, und
- einen zweiten ansteuerbaren Schaltzustand aufweist, in welchem der Speicher des Speicherzweipols Energie aufnehmen oder abgeben kann,

Insgesamt wird dadurch erreicht, dass das Submodul als Ganzes einen ansteuerbaren Durchleitungszustand annehmen kann, der in Fig. 7 dargestellt ist, wobei wiederum der Stromfluss durch die größere Linienstärke verdeutlicht ist. In diesem Durchleitungszustand nimmt die steuerbare Schalteinrichtung des Speicherzweipols 50 den genannten ersten Schaltzustand ein, sodass der Speicherzweipol keine Energie abgibt. Die Spannung $U_x$ zwischen den Anschlüssen X1 und X2 des Submoduls 20 ist im gezeigten Schaltzustand des Moduls 20 als Ganzes Null ($U_x = 0$), mit Ausnahme einer geringen Durchflussspannung, d.h. einer Spannung, die über den Halbleiterschaltern 10a und 30a bzw. den Halbleitern 10 und 30 parallelgeschalteten Dioden bei Stromdurchfluss abfällt. Wie weiter in Fig. 7 zu erkennen ist, sind die ersten bis vierten Schalter 10 bis 30a so geschaltet, dass ein Strom $i_x$ auf zwei parallelen Zweigen durch das Submodul 20 fließt, nämlich auf einem ersten Zweig durch den dritten Schalter 10a und die Freilaufdiode des ersten Schalters 10, und auf einem zweiten Zweig durch die Freilaufdiode des vierten Schalters 30a und den zweiten Schalter 30.

Bei gegebenem Strom $i_X$ bedeutet dies, dass durch jeden Schalter beziehungsweise jede Diode nur halb so viel Strom fließt, wie in den Schaltzuständen von Fig. 3 oder Fig. 5. Geht man weiter davon aus, dass die Halbleiter eine Ohm'sche Durchlasskennlinie haben, wie dies zum Beispiel bei Feldeffekt-Transistoren der Fall ist, bedeutet dies aber auch, dass über den Schaltern nur die halbe Spannung abfällt, sodass sich die Verlustleistung des Submodules insgesamt, verglichen mit der Situation von Fig. 3 oder Fig. 5, und bei gleichem Gesamtstrom $i_X$, halbiert. Für typische Durchlasskennlinien von IGBT-Transistoren ergibt sich ein etwas geringerer Vorteil, der aber immer noch erheblich ist.

Fig. 7 zeigt einen Durchleitungszustand für den Fall, dass Ux (bis auf Durchlassspannung) gleich Null ($U_x = 0$) und der Stromfluss $i_X$ größer Null ist ($i_x > 0$). Dieser Schaltzustand wird in der folgenden Beschreibung durch Z = 5 bezeichnet

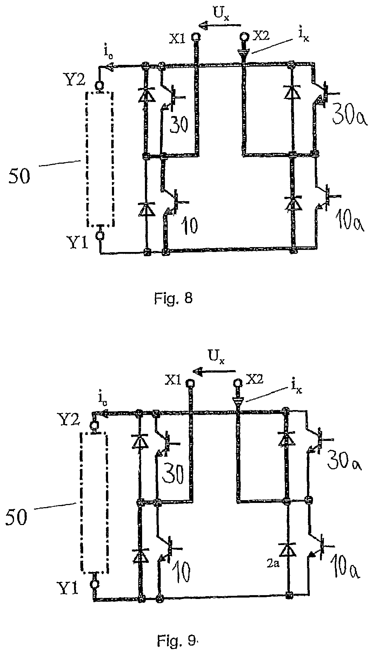

Fig. 8 zeigt einen weiteren Durchleitungszustand, bei dem Ux gleichfalls (bis auf Durchlassspannung) Null ist ($U_x = 0$), aber der Durchgangsstrom $i_X$ negativ ist ($i_X < 0$), die Stromrichtung also umgekehrt ist. Dieser Schaltzustand wird im Folgenden auch als Z = 6 bezeichnet.

Fig. 9 zeigt das Submodul 20 von Fig. 7 in einem weiteren Schaltzustand, in dem die steuerbare Schalteinrichtung des Speicherzweipols und die ersten bis vierten Schalter 10 bis 30a so geschaltet sind, dass die Spannung zwischen dem zweiten und dem ersten Submodulanschluss X2, X1 positiv ist und ein positiver Strom $i_c$ in den Speicherzweipol 50 fließt, sodass der Speicher des Speicherzweipols geladen wird. Dieser Schaltzustand wird unten als Z = 1 bezeichnet.

Fig. 10 zeigt das Submodul 20 von Fig. 7 in einem Schaltzustand, in dem die Spannung zwischen dem zweiten und ersten Submodulanschluss X2, X1 gleichfalls positiv ist, aber sowohl der Modulstrom $i_X$ als auch der Ladestrom des Speichermoduls 50 $i_c$ negativ sind, der Speicher des Speicherzweipols 50 somit entladen wird. Dieser Zustand wird nachfolgend als Z = 2 bezeichnet.

Schließlich hat das Submodul 20 von Fig. 7 zwei weitere Schaltzustände, die nicht explizit gezeigt sind, nämlich einen Zustand Z = 3, bei dem die Spannung zwischen dem zweiten und dem ersten Submodulanschluss X2, X1 negativ ist ($U_X < 0$) und der Speicher des Speicherzweipols 50 entladen wird ($i_c < 0$), und ein Zustand Z = 4, in dem die Spannung zwischen dem zweiten und dem ersten Submodulanschluss X2, X1 negativ ist ($U_X < 0$), und der Speicher des Speicherzweipols 50 geladen wird ($i_c > 0$).

Fig. 11 zeigt eine weitere Variante des Submoduls 20 im Schaltungszustand Z = 5, wobei das Submodul 20 das demjenigen von Fig. 7 bis 9 identisch ist, mit der Ausnahme, dass an Stelle von gewöhnlichen Halbleiterschaltern und gegenläufig paralleler Diode hier rückwärtsleitende Leistungshalbleiter verwendet werden. Fig. 12 zeigt das Submodul 20 von Fig. 11 im Zustand Z = 1.

Die Fig. 13 bis Fig. 17 zeigen beispielhaft verschiedene Ausführungsformen des Speicherzweipoles 50. Fig. 13 bis Fig. 15 sind dabei Ausführungsformen, welche nur einen Speicherkondensator 9 als Energiespeicher enthalten. Die darin gezeigten Schalter bilden die obengenannte Schalteinrichtung, die ebenfalls durch die Steuereinrichtung 60 (s. Fig. 1) angesteuert wird.

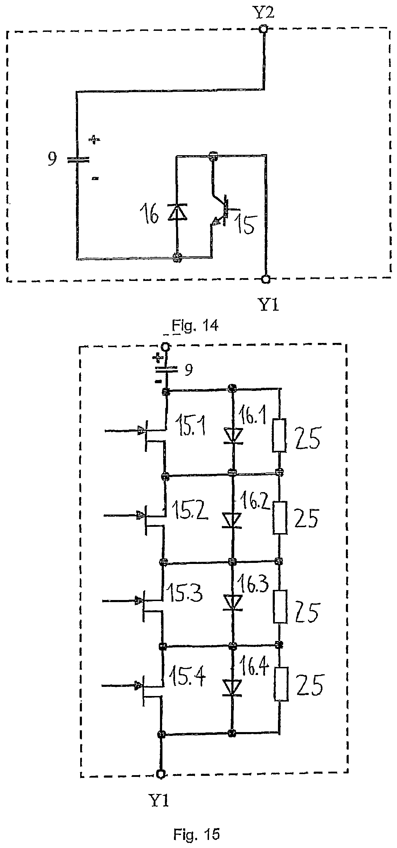

Fig. 14 ist eine besonders aufwandsarme Ausführung. Die darin gezeigten Halbleiterschalter 15 und 16 können, wie bereits erläutert, auch durch einen rückwärtsleitenden Halbleiterschalter ersetzt werden. Wird der steuerbare Halbleiterschalter 15 ausgeschaltet, befindet sich der Speicherzweipol 50 in seinen ersten Zustand; wird er eingeschaltet, befindet er sich in seinem zweiten Zustand.

Fig. 13 weist die gleiche o.a. Funktionalität auf, sofern der steuerbare Halbeiter 17 immer ausgeschaltet bleibt. Er lässt sich jedoch - nach Ausschalten des steuerbaren Halbleiterschalters 15 - auch einschalten. Dadurch wird eine erhebliche Reduktion der Schaltverlustenergien der Halbleiter 10, 30, 10a, 30a ermöglicht, da sie nun unter Nullspannungsbedingungen (engl.: "Zero voltage switching") geschaltet werden können.

Theoretisch lassen sich dadurch sowohl die Einschalt- als auch die Ausschalt-Energien dieser Halbleiter vermeiden - in der Realität zumindest erheblich vermindern. Weil die Erfindung die Möglichkeit bietet, in dem - nur mit geringem Effektivwert des Stromes belasteten - Speicherzweipol 50 Halbleiter einer angepassten Technologie einzusetzen, ist das "Zero voltage switching" auch bzgl. der Gesamtverlustleistung des Konverters vorteilhaft. Eine gut angepasste Technologie für den Speicherzweipol 50 sind z.B. Feldeffekt-Transistoren auf der Basis von Silizium-Carbid oder Gallium-Nitrid, die sehr geringe Schaltverlustenergien aufweisen.

Fig. 15 zeigt einen Speicherzweipol 50, welcher beispielhaft mit einer Serienschaltung mehrerer Feldeffekt-Transistoren 15.1 bis 15.4 aus Silizium-Carbid bestückt ist. Optional sind noch Dioden 16.1 bis 16.4 vorgesehen, welche bei rückwärts-leitenden Halbleitern nicht unbedingt erforderlich sind. Des Weiteren sind optional Ohm'sche Widerstände 25 vorgesehen, welche in bekannter Weise die statische Spannungsaufteilung der Serienschaltung verbessern können.

Eine derartige Ausführung des Speicherzweipoles 50 hat weitere Vorteile:

- Die Serienschaltung von Halbleiterschaltern mit niedriger Spannung hat i.a. wesentlich kleinere Schaltverlustenergien als ein Halbleiter mit entsprechend höherer Spannungsdimensionierung.
- Die Serienschaltung der Halbleiterschalter kann so ausgelegt werden, dass sie auch bei Defekt eines Halbleiters noch funktionsfähig bleibt. Dies ist grundsätzlich bekannt und wird z.B. bei der Serienschaltung von Thyristoren in Umrichtern der Hochspannungs-Gleichstrom-Übertragung genutzt. Im vorliegenden Zusammenhang ergibt sich der Vorteil, dass eine stoßartige Entladung des Speicherkondensators 9 sicher vermieden werden kann, ohne dass alle Halbleiterschalter 10, 30, 10a, 30a als Serienschaltung ausgeführt werden müssen. Eine stoßartige, kurzschlussartige Entladung des Speicherkondensators ist bekanntlich - aufgrund der resultierenden Zerstörungen der Halbleiter und deren Kontakte sowie der Kraft- und Lichtbogenwirkungen - äußerst unerwünscht und gefährlich.

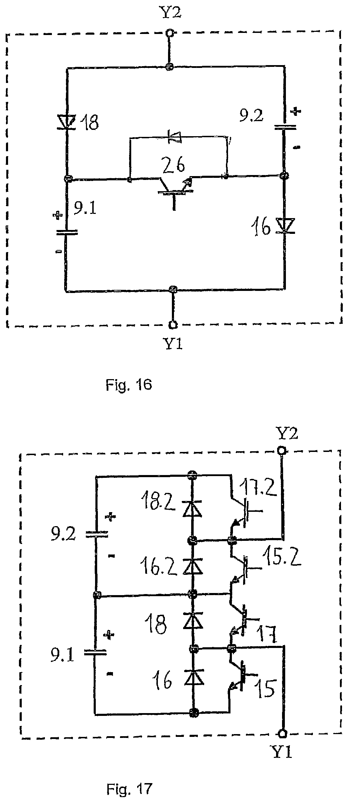

Fig. 16 zeigt eine weitere mögliche Ausführungsform des Speicherzweipoles 50, welche zwei Speicherkondensatoren 9.1 und 9.2 enthält. Wenn der steuerbare Halbleiterschalter 26 ausgeschaltet ist, befindet sich der Speicherzweipol im ersten Zustand, wenn er eingeschaltet ist, in seinem zweiten Zustand. In diesem Zustand sind hier die Speicherkondensatoren 9.1 und 9.2 in Reihe geschaltet - falls der Zweipol 50 Energie abgibt. Sie sind parallel geschaltet, falls der Zweipol 50 Energie aufnimmt. In manchen Anwendungen ist es vorteilhaft, wenn der Zweipol 50 möglichst hohe Energiebeträge bei vergleichsweise niedriger Spannung aufnehmen kann.

Fig. 17 zeigt eine weitere Ausführungsform eines Speicherzweipoles 50, welche eine sog. Multilevel-Spannung bzw. Mehrpunkt-Spannung der Ausschlussspannung $U_X$ des zugehörigen Submoduls ermöglicht. Es sind viele Schaltungen der Leistungselektronik bekannt, welche eine Mehrpunkt-Spannung mit mehr als drei Spannungsniveaus erzeugen können. Sie benötigen jedoch mehrere direkt oder indirekt seriengeschaltete Halbleiterschalter in den Hauptzweigen des Umrichters. Demgegenüber ist es jedoch ausreichend und vorteilhafter, eine solche Serienschaltung nur im Speicherzweipol 50 einzusetzen, weil dort der Effektivwert des Stromes wesentlich geringer ist. In Folge dessen sind auch die resultierenden Verlustleistungen des Umrichters in Summe geringer.

Unter Bezugnahme auf Fig. 18 und 19 soll erläutert werden, dass speziell für den Einsatz der Submodule 20 in einem modularen Multilevelkonverter Randbedingungen vorliegen, welche dazu führen, dass der quantitative Vorteil der Erfindung bezüglich der Einsparung von Verlustleistung sehr wesentlich zum Tragen kommt. Fig. 18 zeigt den zeitlichen Verlauf des Aussteuergrads a(t) für einen der sechs Zweige bzw. Ventile 2 des modularen Multilevelkonverters 1 von Fig. 1. Der Aussteuergrad a ist der Zweigspannung proportional. Der Begriff "Aussteuergrad", der in der englischen Fachliteratur als "modulation index" bezeichnet wird, ist ein in der Leistungselektronik üblicher Begriff und wie folgt festgelegt:

- Aussteuergrad a = 1 bedeutet, dass jedes der Submodule 20 des Zweiges 2 den Schaltzustand $U_X$ = +$U_c$ einnimmt, sodass der positive Maximalwert der Zweigspannung erreicht wird.
- Aussteuergrad a = 0 bedeutet, dass jedes der Submodule 20 des Zweiges 2 den Schaltzustand $U_X$ = 0 einnimmt, sodass die resultierende Zweigspannung zu Null wird.
- Werte zwischen diesen beiden Grenzwerten werden dadurch eingestellt, dass beide der obengenannten Schaltzustände in zeitlicher Abfolge alternierend mit entsprechender relativer Häufigkeit geschaltet werden.
- Für negative Zweigspannungen sind sinngemäß negative Aussteuergrade (a < 0) einzustellen, wobei analog die Schaltzustände mit $U_X$ = -$U_c$ statt $U_X$ = +$U_c$, sowie weiterhin als zweiter Schaltzustand $U_X$ = 0 genutzt wird.

Fig. 19 zeigt den zeitlichen Verlauf des Zweigstromes i(t) desselben Zweiges des modularen Multilevelkonverters.

Fig. 18 und 19 zeigen einen typischen, realistischen Betriebsfall eines modularen Multilevelkonverters im Nennbetrieb. Es ist kennzeichnend, dass der eingestellte Nennwert $a_{DC}$ der DC-Spannung geringer als bei einem mit Halbbrücken-Submodulen bestückten modularen Multilevelkonverter gewählt wird. Dies hat unter anderem den Vorteil, dass die Zweigströme einen kleineren Wechselstromanteil aufweisen.

Hohe negative Werte der Zweigspannung werden im Nennbetrieb im Allgemeinen nicht benötigt. Im dargestellten typischen Beispiel beträgt die Nutzung der maximal möglichen negativen Zweigspannung nur ca. 20%, sodass die mittlere, zeitliche Einschaltdauer des Schaltzustandes mit $U_X$ = 0 im Bereich negativer Aussteuergrade (a < 0) und Zweigspannungen über 80% beträgt. Dies entspricht aber gerade den Durchleitungszuständen des Submoduls, bei denen wie oben erläutert die vergleichsweise große Verringerung der Verlustleistung erreicht wird. In diesem Bereich treten jedoch die höchsten Ströme auf (s. Fig. 19), sodass der Vorteil der Erfindung sehr wesentlich ist.

Weil in einem modularen Multilevelkonverter die Wirkleistung nicht an der DC-Seite der Submodule (parallel zum Kondensator), sondern an dem übergeordneten DC-BUS (vgl. Bezugzeichen 5 und 6 von Fig. 1) des Konverters eingespeist oder rückgespeist wird, sind den Anschlussströmen und Anschlussspannungen der Submodule Gleichanteile überlagert (vgl. auch "Leistungselektronische Schaltungen", Springer Vieweg-Verlag, 3. Auflage, ISBN 978-3-642-30103-2, Kapitel 8.5.9, S. 748).

Im Allgemeinen wird angestrebt, die Gleichanteile gleichmäßig auf die sechs Zweige des modularen Multilevelkonverters, und innerhalb der Zweige gleichmäßig auf die Submodule 20 aufzuteilen. Der Gleichanteil des Aussteuergrads und der Spannung beträgt dann die Hälfte der der DC-Spannung des Konverters, und der Gleichanteil des Stromes beträgt ein Drittel des DC-Stromes des Konverters ($I_d$/3, s. Fig. 19), bei symmetrischer Aufteilung der Wirkleistung des Konverters auf die drei Phasen des Drehstromsystems, wie es in Fig. 1 gezeigt ist. Dies wird im Nennbetrieb angestrebt und ist auch sinnvoll realisierbar.

Aus Gründen einer ausgeglichenen Ladungsbilanz der Speicherkondensatoren der Submodule, und aufgrund des Energieerhaltungssatzes, der fordert, dass die drehstromseitige Wirkleistung der Gleichstromleistung bis auf die geringe Konverter-Verlustleistung entspricht, sind die in Fig. 18 und 19 gezeigten Verläufe in der Tat typisch für den Betrieb eines modularen Multilevelkonverters bei überwiegender Übertragung von Wirkleistung. Dies gilt sowohl für den Idealfall, bei dem Strom und Spannung gleichphasig sind ($\varphi$ = 0° in Fig. 19), aber die Verhältnisse ändern sich nicht wesentlich bei zusätzlicher anteiliger Blindleistung (z. B. $\varphi$ = 30°), was ebenfalls in Fig. 19 dargestellt ist.

Bei Umkehrung der Energieflussrichtung (Rückspeisen statt Einspeisen von Wirkleistung) kehren sich sowohl das Vorzeichen des Gleichstromanteiles ($I_d$/3) als auch das des Wechselstromanteiles ($I_w$/2) um. Bezüglich der Durchlassverlustleistung des Submodules ist dies ohne Relevanz, sodass die geschilderten Vorteile erhalten bleiben.

Die erzielbare Reduktion der mittleren Durchlassverlustleistung im Nennbetrieb des Konverters ist abhängig von der konkreten Durchlasskennlinie der eingesetzten Halbleiterschalter. Für eine in beiden Stromrichtungen rein Ohm'sche Durchlasskennlinie (wie sie u.a. für Feldeffekt-Transistoren realisierbar ist) ergibt sich eine Reduktion von typischerweise ca. 30% der Durchlassverlustleistungen - verglichen mit modularen Multilevelkonvertern, die Vollbrücken-Submodule wie in Fig. 3, 4 und 5 verwenden. Dies ist ein überraschendes Ergebnis, das den speziellen Rahmenbedingungen bei modularen Multilevelkonverter-Topologien geschuldet ist.

Zusätzlich zu der erläuterten Reduktion der Durchlassverlustleistung ermöglicht die Erfindung auch eine Reduktion der Schaltverlustleistung. Um dies zu erläutern dienen die nachfolgend wiedergegebenen Tabellen 1 bis 6, die jeweils die folgenden Größen enthalten:

- Einen mit Z bezeichneten Zustand, der eine spezifische Kombination aus Submodul-Anschlussspannung $U_x$, Vorzeichen des Submodul-Anschlussstromes (sign $i_x$) und Vorzeichen des Stromes an den Anschlüssen des Speicherzweipols 50 (sign $i_c$) gekennzeichnet ist. Dabei ist die Anschlussspannung $U_x$ auf die Spannung eines im Speicherzweipol enthaltenen Kondensators $U_c$ normiert und deshalb als $U_x/U_c$ bezeichnet.

Das Vorzeichen des Stromes an den Anschlüssen des Speicherzweipols 50 ist so definiert, dass

- ein positives Vorzeichen (sign $i_c$ = +1) eine Energieaufnahme und
- ein negatives Vorzeichen (sign ic = -1) eine Energieabgabe des Zweipols 50 bedeutet.

Die Ströme $i_{10}$, $i_{10a}$, $i_{30}$ und $i_{30a}$ in den rückwärtsleitenden Halbleiterschaltern 10, 10a, 30, 30a (s. Fig. 11 und 12) sind so definiert, dass positive Vorzeichen die vom Steueranschluss bzw. Gate aktiv schaltbare Stromrichtungen bezeichnen. Negative Vorzeichen der Ströme bedeuten demnach, dass die antiparallele Diodenstruktur des Halbleiterschalters leitet. Der Stromfluss ist in diesem Fall nicht vom Gate aus steuerbar. Wie bereits erwähnt wurde, kann jedoch gleichwohl ein Einschaltsignal am Steueranschluss anliegen. Dies ist dann sinnvoll, wenn es - wie im Allgemeinen bei Feldeffekt-Transistoren - die Durchlassspannung reduziert, oder wenn das Vorzeichen des Stromes messtechnisch nicht sicher erkannt werden kann.

Die Ströme der Halbleiterschalter $i_{10}$, $i_{10a}$, $i_{30}$, $i_{30a}$ sind auf den Betrag des extern fließenden Zweigstromes $|i_a|$ des Konverters bezogen, welcher im betrachteten Zeitraum fließt. Dieser Strom fließt aufgrund der Reihenschaltung der Submodule im Zweig bzw. Ventil auch als Anschlussstrom $i_x$. In Tabelle 1 bezeichnen

Z = 1:  Ein Zustand mit positiver Anschlussspannung $U_x$, positivem Anschlussstrom $i_x$ und Energieaufnahme des Speicherzweipoles 50

Z = 2:  Wie Z = 1, jedoch negativer Anschlussstrom $i_x$ und (resultierend) Energieabgabe des Speicherzweipoles 50

Z = 3:  Ein Zustand mit negativer Anschlussspannung $U_x$, positivem Anschlussstrom $i_x$ und Energieabgabe des Speicherzweipoles 50

Z = 4:  Wie Z = 3, jedoch negativer Anschlussstrom $i_x$ und (resultierend) Energieaufnahme des Speicherzweipoles 50

Tabelle 1

| Z | $\dfrac{U_x}{U_c}$ | sign $i_x$ | sign $i_c$ | $\dfrac{i_{10}}{\|i_a\|}$ | $\dfrac{i_{10a}}{\|i_a\|}$ | $\dfrac{i_{30}}{\|i_a\|}$ | $\dfrac{i_{30a}}{\|i_a\|}$ | S |
|---|---|---|---|---|---|---|---|---|
| 1 | +1 | +1 | +1 | -1 | 0 | 0 | -1 | B |
| 2 | +1 | -1 | -1 | +1 | 0 | 0 | +1 | B |
| 3 | -1 | +1 | -1 | 0 | +1 | +1 | 0 | B |
| 4 | -1 | -1 | +1 | 0 | -1 | -1 | 0 | B |

In allen Zuständen Z = 1 bis Z = 4 ist die steuerbare Schalteinrichtung des Speicherzweipols 50 in den zweiten ansteuerbaren Schaltzustand geschaltet, der in der Tabelle in der Spalte "S" durch den Buchstaben B charakterisiert ist und in welchem der Speicher des Speicherzweipols Energie aufnehmen oder abgeben kann.

In Tabelle 2 sind weiterhin die folgenden Zustände angegeben:

Z = 5:  Ein Zustand mit $U_x$ = 0 und positivem Anschlussstrom $i_x$, und

Z = 6:  Ein Zustand mit $U_x$ = 0 und negativem Anschlussstrom $i_x$

Tabelle 2

| Z | $\dfrac{U_x}{U_c}$ | sign $i_x$ | $\dfrac{i_{10}}{|i_a|}$ | $\dfrac{i_{10a}}{|i_a|}$ | $\dfrac{i_{30}}{|i_a|}$ | $\dfrac{i_{30a}}{|i_a|}$ | S |
|---|---|---|---|---|---|---|---|
| 5 | 0 | +1 | $-\dfrac{1}{2}$ | $+\dfrac{1}{2}$ | $+\dfrac{1}{2}$ | $-\dfrac{1}{2}$ | A |
| 6 | 0 | -1 | $+\dfrac{1}{2}$ | $-\dfrac{1}{2}$ | $-\dfrac{1}{2}$ | $+\dfrac{1}{2}$ | A |

In beiden Zuständen Z = 5 und Z = 6 muss der Speicherzweipol 50 in den ersten ansteuerbaren Schaltzustand geschaltet werden, in welchem der Speicherzweipol unabhängig von einer Spannung, die zwischen dem ersten und dem zweiten Speicherzweipolanschluss anliegt, keine Energie abgibt. Dieser Schaltzustand wird in den Tabellen durch den Buchstaben A gekennzeichnet.

Steuerungstechnisch werden zur Erzeugung eines positiven Mittelwerts der Anschlussspannung Ux sinnvollerweise nur Schaltzustände mit $U_X = +U_c$ alternierend mit solchen von $U_X = 0$ angesteuert. Analog werden zur Erzeugung negativer Mittelwerte nur Schaltzustände mit $U_X = -U_c$ alternierend mit $U_X = 0$ angesteuert.

Tabelle 3 zeigt eine Schaltfolge zur Erzeugung eines positiven Mittelwertes. Das Vorzeichen des Zweigstromes ist hier als positiv angenommen. Es zeigt sich, dass bei jedem Umschaltvorgang grundsätzlich nur maximal die Hälfte des Zweigstromes von den Halbleitern geschaltet werden muss. Diese Tatsache ist vorteilhaft bezüglich der entstehenden Schaltverlustleistung und des Grenzwertes der sicher schaltbaren Halbleiterströme. Des Weiteren ersieht man aus Tabelle 3, dass die Ströme der Halbleiter mit negativer Stromrichtung nicht zu Null werden, sodass in diesen keinerlei Schaltverlustenergien auftreten, insbesondere keine Recovery-Verluste aufgrund von auszuräumenden Speicherladungen. Die Halbleiterschalter 30 und 10a müssen aktiv ein- und ausgeschaltet werden, jedoch - wie erwähnt - nur bei halbem Strom.

Tabelle 3

| Z | $\dfrac{U_x}{U_c}$ | sign $i_x$ | $\dfrac{i_{10}}{|i_a|}$ | $\dfrac{i_{10a}}{|i_a|}$ | $\dfrac{i_{30}}{|i_a|}$ | $\dfrac{i_{30a}}{|i_a|}$ | S |
|---|---|---|---|---|---|---|---|
| 5 | 0 | +1 | $-\dfrac{1}{2}$ | $+\dfrac{1}{2}$ | $+\dfrac{1}{2}$ | $-\dfrac{1}{2}$ | A |
| 1 | +1 | +1 | -1 | 0 | 0 | -1 | B |
| 5 | 0 | +1 | $-\dfrac{1}{2}$ | $+\dfrac{1}{2}$ | $+\dfrac{1}{2}$ | $-\dfrac{1}{2}$ | A |

Tabelle 4 zeigt die gleiche Schaltsequenz wie Tabelle 3, jedoch bei negativer Stromrichtung des Anschlussstromes $i_x$. Die Schalter 30 und 10a müssen hier nicht geschaltet werden, sie können immer ausgeschaltet bleiben. Sie können jedoch, wie bereits erläutert, trotz negativer Stromrichtung auch weiterhin, wie in Tabelle 3, angesteuert werden. Eine gewisse Schaltverlustenergie tritt nun jedoch im Speicherzweipol 50 beim Übergang von Schaltzustand A zu B und vice versa bei voller Stromamplitude auf.

Tabelle 4

| Z | $\dfrac{U_x}{U_c}$ | sign $i_x$ | $\dfrac{i_{10}}{|i_a|}$ | $\dfrac{i_{10a}}{|i_a|}$ | $\dfrac{i_{30}}{|i_a|}$ | $\dfrac{i_{30a}}{|i_a|}$ | S |
|---|---|---|---|---|---|---|---|
| 6 | 0 | -1 | $+\dfrac{1}{2}$ | $-\dfrac{1}{2}$ | $-\dfrac{1}{2}$ | $+\dfrac{1}{2}$ | A |
| 2 | +1 | -1 | +1 | 0 | 0 | +1 | B |
| 6 | 0 | -1 | $+\dfrac{1}{2}$ | $-\dfrac{1}{2}$ | $-\dfrac{1}{2}$ | $+\dfrac{1}{2}$ | A |

Die Halbleiter im Speicherzweipol 50 können jedoch speziell und abweichend von den ersten bis vierten Halbleitern 10, 10a, 30, 30a ausgeführt werden. Insbesondere können sie wegen des geringen Effektivwertes des Stromes auf schnelles, verlustarmes Umschalten und kleinere Halbleiterfläche optimiert werden. Sie können zudem auch aus einem Halbleitermaterial mit hohem Bandabstand, z.B. Siliziumcarbid oder Galliumnitrid, hergestellt werden, was unter den gegebenen Randbedingungen der Erfindung sehr vorteilhaft ist.

Tabellen 5 und 6 zeigen, der Vollständigkeit halber, die analogen Vorgänge zu Tabellen 3 und 4 bei negativen Mittelwerten der Anschlussspannung $U_x$.

Tabelle 5

| Z | $\dfrac{U_x}{U_c}$ | sign $i_x$ | $\dfrac{i_{10}}{|i_a|}$ | $\dfrac{i_{10a}}{|i_a|}$ | $\dfrac{i_{30}}{|i_a|}$ | $\dfrac{i_{30a}}{|i_a|}$ | S |
|---|---|---|---|---|---|---|---|
| 6 | 0 | -1 | $+\dfrac{1}{2}$ | $-\dfrac{1}{2}$ | $-\dfrac{1}{2}$ | $+\dfrac{1}{2}$ | A |
| 4 | -1 | -1 | 0 | -1 | -1 | 0 | B |
| 6 | 0 | -1 | $+\dfrac{1}{2}$ | $-\dfrac{1}{2}$ | $-\dfrac{1}{2}$ | $+\dfrac{1}{2}$ | A |

Tabelle 6

| Z | $\dfrac{U_x}{U_c}$ | sign $i_x$ | $\dfrac{i_{10}}{|i_a|}$ | $\dfrac{i_{10a}}{|i_a|}$ | $\dfrac{i_{30}}{|i_a|}$ | $\dfrac{i_{30a}}{|i_a|}$ | S |
|---|---|---|---|---|---|---|---|
| 5 | 0 | +1 | $-\dfrac{1}{2}$ | $+\dfrac{1}{2}$ | $+\dfrac{1}{2}$ | $-\dfrac{1}{2}$ | A |
| 3 | -1 | +1 | 0 | +1 | +1 | 0 | B |
| 5 | 0 | +1 | $-\dfrac{1}{2}$ | $+\dfrac{1}{2}$ | $+\dfrac{1}{2}$ | $-\dfrac{1}{2}$ | A |

Bezüglich der Aufteilung des Anschlussstromes $i_x$ auf die Halbleiterschalter 10, 10a, 30, 30a ist anzumerken, dass sich die Stromaufteilung bei den Zustandswechseln nach Tabelle 3 bis Tabelle 6 selbstverständlich nur stetig verändern kann, d. h. nicht sprunghaft. Ein guter Schaltungsaufbau wird jedoch nur kleine, parasitäre Induktivitäten beinhalten. Um Schaltüberspannungen zu begrenzen, werden der Stromkreis über die Halbleiterschalter 10 und 30 und zurück über den Speicherzweipol 50, sowie der Stromkreis über die Halbleiterschalter 10a, 30a und zurück über den Speicherzweipol 50 nur geringe parasitäre Induktivitäten von summarisch weniger als 100nH beinhalten.

Für die schnelle Einstellung der gewünschten Stromaufteilung in den Halbleiterschaltern ist bei der Erfindung jedoch die Summe der parasitären Induktivitäten in dem aus der Reihenschaltung von den Halbleiterschaltern 10, 10a, 30, 30a gebildeten Stromkreis bestimmend. Es ist deshalb hier durch einen entsprechenden räumlichen Aufbau des Stromkreises eine Minimierung der Induktivität notwendig und auch technisch möglich. Im hohen Leistungsbereich wird zur groben Orientierung von ungefähr folgenden Werten auszugehen sein:

R = Durchlasswiderstand (bei Feldeffekt-Transistoren) ca. 1m$\Omega$
L = Summe der parasitären Induktivität ca. 200 nH

Dies ergibt eine Zeitkonstante

$$T = L/4R = 200 \text{ nH}/4\text{mOhm} = 50 \text{ µs},$$

mit welcher sich nach jeder Umschaltung der Anschlussspannung $U_x$ die Stromverteilung einstellt. Die Erfindung ist demnach bei den niedrigen Schaltfrequenzen der Submodule in modularen Multilevelkonvertern gut anwendbar.

Fig. 20 zeigt ein erweitertes Submodul 70, welches aus zwei Submodulen 20 der vorstehend beschriebenen Art gebildet ist, die wie in Figur 20 gezeigt verschaltet sind. Wie in Figur 20 zu erkennen ist, ist der zweite Ausgang X2 des in der Darstellung von Figur 20 des rechten Submoduls 20 mit dem ersten Speicherzweipolanschluss Y1 des linken Submoduls 20 verbunden. Außerdem ist der erste Submodulanschluss X1 des linken Submoduls 20 mit dem zweiten Zweipolanschluss Y2 des rechten Submoduls 20 verbunden. Dadurch wird ein ebenfalls erfindungsgemäßes Submodul 70 gebildet, welches - nach wie vor - einen ersten und einen zweiten Submodulanschluss X1, X2, steuerbare Schalter und mindestens einen Speicherzweipol, konkret jedoch zwei Speicherzweipole umfasst. Dieses erweiterte Submodul 70 wird in der vorliegenden Offenbarung auch als "Doppel-Submodul" bezeichnet, weil es aus der Verschaltung zweier gleichfalls erfindungsgemäßer einfacherer Submodule 20 gebildet werden kann. Die Verbindungen zwischen den Submodulen 20 des "Doppel-Submoduls" 70 sind in Figur 20 mit den Buchstaben V und W gekennzeichnet. Die Verbindungen zu den Verbindungspunkten V und W können konstruktiv freizügig gestaltet werden und müssen nicht - wie für die Schaltungszweige von Halbleiterschaltern bekannt - extrem induktionsarm ausgeführt werden. Dadurch wird die genannte Verschaltung konstruktiv vorteilhaft realisierbar.

Fig. 21 zeigt eine konkrete Ausgestaltung eines derartigen Doppel-Submoduls 70. Die in der Abbildung rechte Hälfte des Doppel-Submoduls 70, umfassend erste bis vierte steuerbare Schalter 10R, 30R, 10aR und 30aR und einen ersten Speicherzweipol 50R, entspricht dem Submodul von Figur 11, wobei in der gewählten Darstellung der erste Anschluss X1 in Fig. 21 rechts und in Fig. 11 links liegt. Die linke Hälfte des Doppel-Submoduls 70 von Fig. 21, umfassend fünfte bis achte Schalter 10L, 30L, 10aL und 30aL und einen zweiten Speicherzweipol 50L, entspricht ebenfalls dem Submodul 20 von Fig. 11, und die beiden Submodule sind so verschaltet, wie in Fig. 20 gezeigt ist: der zweite Submodulanschluss X2 des rechten Submoduls, der dem Verbindungspunkt W von Fig. 21 entspricht, ist mit dem ersten Zweipolanschluss Y1 des zweiten Speicherzweipols 50L verbunden, und der erste Submodulanschluss X1 des linken Submoduls, der dem Verbindungspunkt V entspricht, ist mit dem zweiten Zweipolanschluss Y2 des ersten Speicherzweipols 50R verbunden. Man erkennt, dass der vierte und der fünfte Schalter 30aR, 10L direkt parallel geschaltet sind. Deshalb kann einer der beiden Schalter 30aR, 10L auch weggelassen werden, sodass das erweiterte Submodul 70 auch mit lediglich sieben Schaltern realisiert werden kann.

Der erste und der zweite Speicherzweipol 50R, 50L können von derselben Art sein, wie sie vorstehend unter Bezugnahme auf Fig. 13-17 beschrieben sind. Insbesondere verfügen beide Speicherzweipole 50R, 50L über eine Schalteinrichtung (nicht gezeigt), die den genannten ersten ansteuerbaren Schaltzustand (Zustand A) aufweist, in welchem der jeweilige Speicherzweipol 50R, 50L unabhängig von einer Spannung, die zwischen dem ersten und dem zweiten Speicherzweipolanschluss Y1 und Y2 anliegt, keine Energie abgibt, und einen zweiten ansteuerbaren Schaltzustand (B), in welchem der Speicher des Speicherzweipols 50R, 50L Energie aufnehmen oder abgeben kann.

Es wird betont, dass das Modul 70, obwohl es als "Doppel-Submodul" bezeichnet wird und in der Tat aus zwei erfindungsgemäßen Submodulen aufgebaut ist, seinerseits ein erfindungsgemäßes Submodul bildet, welches als Ganzes lediglich einen ersten Submodulanschluss X1 (rechts in Fig. 21) und einen zweiten Submodulanschluss X2 (links in Fig. 21) hat.

Die Tatsache, dass dieses Submodul 21 jedoch aus zwei einfachen erfindungsgemäßen Submodulen aufgebaut werden kann, stellt einen wesentlichen Vorteil dar, weil es als Doppel-Submodul direkt und ohne Modifikationen aus zwei erfindungsgemäßen Submodulen konfiguriert werden kann. Darüber hinaus ist die Tatsache von Bedeutung, dass die zusätzliche Verlusteinsparung ohne die Nachteile und Einschränkungen erzielbar ist, die oben in Zusammenhang mit der DE 10 2009 057 288 A1 oder der Doktorarbeit von K. Ilves diskutiert wurden. Insbesondere trifft nicht die eingangs erläuterte Problematik der Parallelschaltung der Speicherkondensatoren des "Semi-Fullbridge submodule" auf, die den freizügigen Einsatz der Energiespeicher erheblich einschränken würde, weil kurzschlussartige Ausgleichsströme, wie sie bei einer Parallelschaltung von Kondensatoren auftreten würden, vermieden werden können.

Einzig die aus DE 10 2009 057 288 A1 bekannte Begrenzung des Maximalwertes der negativen Spannung bleibt einschränkend bestehen, dies ist jedoch in den wesentlichen Anwendungsbereichen der modularen Multilevelkonverter tolerabel.

Bei dem Doppel-Submodul von Fig. 21 lässt sich jeder der beiden Speicherzweipole 50R, 50L unabhängig von der Stromrichtung $i_X$ energetisch einsetzen, d.h. in den zweiten ansteuerbaren Schaltzustand B schalten, oder in den ersten ansteuerbaren Schaltzustand (A) schalten, in dem der jeweilige Speicherzweipol 50R, 50L keine Energie abgibt. Dadurch lässt sich insbesondere vermeiden, dass beide Speicherzweipole 50R, 50L unkontrolliert Energie durch kurzschlussartige Ausgleichsströme untereinander austauschen und dabei prinzipbedingt hohe Anteile der Energie in Wärme umgesetzt werden.

Die folgende Tabelle zeigt die Schaltzustände Z des Doppel-Submoduls 70 von Fig. 21. Die Nummer der Zustände setzt sich hierbei aus einer ersten Ziffer, die den Zustand des linken Submodules bezeichnet, und einer zweiten Ziffer, die den Zustand des rechten Submoduls bezeichnet, zusammen. Die Bedeutung der Einzelziffern 1 bis 6 ist weiterhin so, wie sie in Tabellen 1 und 2 zusammengefasst sind. Die angegebene Stromaufteilung kann je nach Durchlasskennlinie der Halbleiter geringfügig abweichen. Insbesondere kann die Stromaufteilung in den Zuständen 15, 26 und 51, 62 geringfügig von den Faktoren ½ und ¼ abweichen, was jedoch ohne wesentliche praktische Bedeutung bleibt.

| Z | $\dfrac{U_{xL}}{U_c}$ | $\dfrac{U_{xR}}{U_c}$ | sign $i_x$ | $\dfrac{i_{10L}}{\lvert i_a \rvert}$ | $\dfrac{i_{10aL}}{\lvert i_a \rvert}$ | $\dfrac{i_{30L}}{\lvert i_a \rvert}$ | $\dfrac{i_{30aL}}{\lvert i_a \rvert}$ | $S_L$ | $\dfrac{i_{10R}}{\lvert i_a \rvert}$ | $\dfrac{i_{10aR}}{\lvert i_a \rvert}$ | $\dfrac{i_{30R}}{\lvert i_a \rvert}$ | $\dfrac{i_{30aR}}{\lvert i_a \rvert}$ | $S_R$ |
|---|---|---|---|---|---|---|---|---|---|---|---|---|---|
| 11 | +1 | +1 | +1 | -½ | 0 | 0 | -1 | B | -1 | 0 | 0 | -½ | B |
| 22 | +1 | +1 | -1 | +½ | 0 | 0 | +1 | B | +1 | 0 | 0 | +½ | B |
| 35 | -1 | 0 | +1 | 0 | +1 | +1 | 0 | B | 0 | 0 | +1 | 0 | A |
| 46 | -1 | 0 | -1 | 0 | -1 | -1 | 0 | B | 0 | 0 | -1 | 0 | A |
| 55 | 0 | 0 | +1 | 0 | +½ | +½ | -½ | A | -½ | +½ | +½ | 0 | A |
| 66 | 0 | 0 | -1 | 0 | -½ | -½ | +½ | A | +½ | -½ | -½ | 0 | A |
| 15 | +1 | 0 | +1 | -¼ | 0 | 0 | -1 | B | -½ | +½ | +½ | -¼ | A |
| 26 | +1 | 0 | -1 | +¼ | 0 | 0 | +1 | B | +½ | -½ | -½ | +¼ | A |
| 53 | 0 | -1 | +1 | 0 | +1 | 0 | 0 | A | 0 | +1 | +1 | 0 | B |
| 64 | 0 | -1 | -1 | 0 | -1 | 0 | 0 | A | 0 | -1 | -1 | 0 | B |
| 51 | 0 | +1 | +1 | -¼ | +½ | +½ | -½ | A | -1 | 0 | 0 | -¼ | B |
| 62 | 0 | +1 | -1 | +¼ | -½ | -½ | +½ | A | +1 | 0 | 0 | +¼ | B |

Das Doppel-Submodul 70 von Fig. 21 ermöglicht in seiner Anwendung in einem modularen Multilevelkonverter eine weitere Verlusteinsparung von typischerweise 20-25% und weist dabei - außer der geringeren negativen Maximalspannung - keinerlei technisch bedeutende Einschränkungen der Funktion auf.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

**Patentansprüche**

1. Modul (20), das folgendes umfasst:

   - einen ersten und einen zweiten Modulanschluss (X1, X2),
   - einen ersten, einen zweiten, einen dritten und einen vierten steuerbaren Schalter (10, 30, 10a, 30a), und
   - einen ersten Speicherzweipol (50), welcher einen ersten und einen zweiten Zweipolanschluss (Y1, Y2), einen Energiespeicher (9, 9.1, 9.2) und eine steuerbare Schalteinrichtung umfasst, wobei die steuerbare Schalteinrichtung

     • einen ersten ansteuerbaren Schaltzustand aufweist, in welchem der erste Speicherzweipol (50) unabhängig von einer Spannung, die zwischen dem ersten und dem zweiten Speicherzweipolanschluss (Y1, Y2) anliegt, keine Energie abgibt, und
     • einen zweiten ansteuerbaren Schaltzustand aufweist, in welchem der Speicher (9, 9.1, 9.2) des Speicherzweipols (50) Energie aufnehmen oder abgeben kann,

   wobei das Modul (20) als Ganzes einen ansteuerbaren Durchleitungszustand hat, in dem

     - die steuerbare Schalteinrichtung des ersten Speicherzweipols (50) den genannten ersten Schaltzustand einnimmt, und
     - die ersten bis vierten Schalter (10, 30, 10a, 30a) so geschaltet sind, dass ein Strom auf zwei parallelen Zweigen durch das Modul (20) fließt,

   wobei das Modul (20) weiter einen oder mehrere der folgenden vier ansteuerbaren Energieabgabe- oder -aufnahmezustände hat, in denen jeweils die steuerbare Schalteinrichtung des ersten Speicherzweipols (50) den genannten zweiten Schaltzustand einnimmt, und

     1. die Spannung zwischen dem zweiten und dem ersten Modulanschluss (X2, X1) positiv ist und der Speicher (9, 9.1, 9.2) des ersten Speicherzweipols (50) geladen wird, oder
     2. die Spannung zwischen dem zweiten und dem ersten Modulanschluss (X2, X1) positiv ist und der Speicher (9, 9.1, 9.2) des ersten Speicherzweipols (50) entladen wird, oder
     3. die Spannung zwischen dem zweiten und dem ersten Modulanschluss (X2, X1) negativ ist und der Speicher (9, 9.1, 9.2) des ersten Speicherzweipols (50) entladen wird, oder
     4. die Spannung zwischen dem zweiten und dem ersten Modulanschluss (X2, X1) negativ ist und der Speicher (9, 9.1, 9.2) des ersten Speicherzweipols (50) geladen wird.

2. Modul (20) nach Anspruch 1, das weiter folgendes umfasst:

   einen fünften, einen sechsten, einen siebten und einen achten steuerbaren Schalter (10L, 30L, 10aL, 30aL), wobei der fünfte steuerbare Schalter dem genannten vierten Schalter direkt parallel geschaltet ist und optional entfallen kann, und

   einen zweiten Speicherzweipol (50L), welcher einen ersten und einen zweiten Zweipolanschluss (Y1, Y2), einen Energiespeicher (9, 9.1, 9.2) und eine steuerbare Schalteinrichtung umfasst, wobei die steuerbare Schalteinrichtung

     • einen ersten ansteuerbaren Schaltzustand aufweist, in welchem der zweite Speicherzweipol (50L) unabhängig von einer Spannung, die zwischen seinem ersten und seinem zweiten Speicherzweipolanschluss (Y1, Y2) anliegt, keine Energie abgibt, und
     • einen zweiten ansteuerbaren Schaltzustand aufweist, in welchem der Speicher (9, 9.1, 9.2) des zweiten Speicherzweipols (50L) Energie aufnehmen oder abgeben kann,

wobei das Modul (20) als Ganzes einen ansteuerbaren Durchleitungszustand hat, in dem

- die steuerbare Schalteinrichtung des ersten und des zweiten Speicherzweipols (50R, 50L) den genannten ersten Schaltzustand einnehmen, und
- die ersten bis achten Schalter (10, 30, 10a, 30a) so geschaltet sind, dass ein Strom auf zwei parallelen Zweigen durch das Modul fließt.

3. Umrichter (1), umfassend eine Mehrzahl von in Reihe geschalteten steuerbaren zweipoligen Submodulen (20),

wobei zumindest ein Teil der genannten Submodule (20) durch Module nach Anspruch 1 gebildet ist, und einen ersten und einen zweiten Submodulanschluss (X1, X2) aufweisen, die durch den ersten und den zweiten Modulanschluss (X1, X2) des Moduls von Anspruch 1 gebildet sind,
wobei der Umrichter (1) ferner eine Steuereinheit (60) umfasst, die zum Steuern der Schalter (10, 30, 10a, 30a) und der Schalteinrichtung des ersten Speicherzweipols (50) von Submodulen eingerichtet ist, wobei die Steuereinheit (60) dazu eingerichtet ist, ausgewählte Submodule (20) wahlweise in den Durchleitungszustand zu schalten.

4. Umrichter (1) nach Anspruch 3, der eine Multilevelkonverter-Struktur aufweist.

5. Umrichter (1) nach einem der Ansprüche 3 oder 4, bei dem der erste und der zweite Schalter (10, 30) in Reihe geschaltet sind, der dritte und der vierte Schalter (10a, 30a) in Reihe geschaltet sind, und die Reihenschaltung aus dem ersten und dem zweiten Schalter (10, 30), die Reihenschaltung aus dem dritten und dem vierten Schalter (10a, 30a) und der erste Speicherzweipol (50) parallel geschaltet sind, wobei vorzugsweise ein Potentialpunkt zwischen dem ersten und dem zweiten Schalter (10, 30) mit dem ersten Submodulanschluss (X1) verbunden ist und ein Potentialpunkt zwischen dem dritten und vierten Schalter (10a, 30a) mit dem zweiten Submodulanschluss (X2) verbunden ist.

6. Umrichter (1) nach Anspruch 5, bei dem der erste und der zweite Schalter (10, 30) bezüglich ihrer Durchlassrichtung gleichsinnig orientiert sind und der dritte und der vierte Schalter (10a, 30a) bezüglich ihrer Durchlassrichtung gleichsinnig orientiert sind, wobei
der erste und der zweite Schalter (10, 30) bezüglich ihrer Durchlassrichtung in Maschenumlaufrichtung vorzugsweise gegensinnig zu dem dritten und dem vierten Schalter (10a, 30a) orientiert sind.

7. Umrichter (1) nach einem der vorhergehenden Ansprüche, wobei zumindest ein Teil der genannten Submodule (20 ) durch Module nach Anspruch 2 gebildet ist.

8. Umrichter (1) nach Anspruch 7, bei dem der fünfte und der sechste Schalter (10L, 30L) in Reihe geschaltet sind, der siebte und der achte Schalter (10aL, 30aL) in Reihe geschaltet sind, und die Reihenschaltung aus dem fünften und dem sechsten Schalter (10L, 30L), die Reihenschaltung aus dem siebten und dem achten Schalter (10aL, 30aL) und der zweite Speicherzweipol (50L) parallel geschaltet sind, und/oder

bei dem ein Potentialpunkt zwischen dem ersten und dem zweiten Schalter (10R, 30R) mit dem ersten Submodulanschluss (X1) verbunden ist, ein Potentialpunkt (W) zwischen dem dritten und vierten Schalter (10aR, 30aR) mit dem ersten Anschluss (Y1) des zweiten Speicherzweipols (50L) verbunden ist,
ein Potentialpunkt (V) zwischen dem fünften und dem sechsten Schalter (10L, 30L) mit dem zweiten Anschluss (Y2) des ersten Speicherzweipols (50R) verbunden ist, und ein Potentialpunkt zwischen dem siebten und achten Schalter (10aL, 30aL) mit dem zweiten Submodulanschluss (X2) verbunden ist.

9. Umrichter (1) nach einem der Ansprüche 7 oder 8, bei dem der fünfte und der sechste Schalter (10L, 30L) bezüglich ihrer Durchlassrichtung gleichsinnig orientiert sind und der siebte und der achte Schalter (10aL, 30aL) bezüglich ihrer Durchlassrichtung gleichsinnig orientiert sind, wobei
der fünfte und der sechste Schalter (10L, 30L) bezüglich ihrer Durchlassrichtung in einem geschlossenen Maschenumlauf vorzugsweise gegensinnig zu dem siebten und dem achten Schalter (10aL, 30aL) orientiert sind.

10. Umrichter (1) nach einem der Ansprüche 3 bis 9, bei dem einer oder mehrere der ersten bis vierten oder ersten bis achten Schalter (10, 30, 10a, 30a) durch Leistungshalbleiter gebildet ist bzw. sind, insbesondere durch IGBTs oder Thyristoren, insbesondere GTO-Thyristoren.

11. Umrichter (1) nach einem der Ansprüche 3 bis 10, bei dem einer oder mehrere der ersten bis vierten oder ersten bis achten Schalter (10, 30, 10a, 30a) durch rückwärtsleitende Leistungshalbleiter gebildet ist bzw. sind, und/oder bei dem einer oder mehrere der ersten bis vierten oder ersten bis achten Schalter (10, 30, 10a, 30a) eine gegensinnig parallel geschaltete Freilaufdiode haben.

12. Umrichter (1) nach einem der Ansprüche 3 bis 11, bei dem die Steuereinheit (60) dazu eingerichtet ist, einen Schalter auch in Schaltzuständen, in denen ein Stromfluss gegenläufig zu diesem Schalter ist, leitend zu schalten, und/oder wobei der Umrichter mehrere Zweige aus in Reihe geschalteten Submodulen (20) aufweist, wobei jeder Zweig mindestens 3, vorzugsweise mindestens 6 der genannten Submodule aufweist.

13. Umrichter (1) nach einem der vorhergehenden Ansprüche, bei dem der Speicher (9, 9.1, 9.2) des ersten und/oder zweiten Speicherzweipols (50) mindestens einen Kondensator, insbesondere einen unipolaren Kondensator umfasst, wobei

der erste und/oder der zweite Speicherzweipol (50) vorzugsweise mindestens zwei Kondensatoren (9.1, 9.2) enthält bzw. enthalten, die in Reihe geschaltet oder in Reihe schaltbar sind, wobei die mindestens zwei Kondensatoren (9.1, 9.2) vorzugsweise zum Laden parallel und zum Entladen in Reihe schaltbar sind.

14. Umrichter (1) nach einem der Ansprüche 3 bis 13, bei dem die Schalteinrichtung des ersten und/oder des zweiten Speicherzweipols (50) mindestens einen Halbleiterschalter (15.1, 15.2, 15.3, 15.4) umfasst, dessen prozentuale Verlustleistung geringer ist als diejenige der ersten bis vierten Schalter (10, 30, 10a, 30a), und/oder

bei dem die Schalteinrichtung des ersten und/oder des zweiten Speicherzweipols (50) mindestens einen SiC-Schalter oder mindestens einen GaN-Schalter (15.1, 15.2, 15.3, 15.4) umfasst, und/oder bei dem die Schalteinrichtung des ersten und/oder des zweiten Speicherzweipols (50) eine Mehrzahl von in Reihe geschalteten Halbleiterschaltern (15.1, 15.2, 15.3, 15.4) enthält.

15. Verfahren zum Steuern eines Umrichters (1), der eine Mehrzahl von in Reihe geschalteten steuerbaren Submodulen (20) enthält, wobei zumindest ein Teil der genannten Submodule (20) jeweils Folgendes umfasst:

- einen ersten und einen zweiten Submodulanschluss (X1, X2),
- einen ersten, einen zweiten, einen dritten und einen vierten steuerbaren Schalter (10, 30, 10a, 30a), und
- einen Speicherzweipol (50), welcher einen ersten und einen zweiten Zweipolanschluss (Y1, Y2), einen Energiespeicher (9, 9.1, 9.2) und eine steuerbare Schalteinrichtung umfasst, wobei die steuerbare Schalteinrichtung

• einen ersten ansteuerbaren Schaltzustand aufweist, in welchem der Speicherzweipol (50) unabhängig von einer Spannung, die zwischen dem ersten und dem zweiten Speicherzweipolanschluss (Y1, Y2) anliegt, keine Energie abgibt, und
• einen zweiten ansteuerbaren Schaltzustand aufweist, in welchem der Speicher (9, 9.1, 9.2) des Speicherzweipols (50) Energie aufnehmen oder abgeben kann,

wobei die Schalter (10, 30, 10a, 30a) und die Schalteinrichtung des Speicherzweipols (50) mindestens eines Submoduls (20) zumindest vorübergehend in einen ansteuerbaren Durchleitungszustand geschaltet werden, in dem

- die steuerbare Schalteinrichtung des Speicherzweipols (50) den genannten ersten Schaltzustand einnimmt, und
- die ersten bis vierten Schalter (10, 30, 10a, 30a) so geschaltet sind, dass ein Strom auf zwei parallelen Zweigen durch das Submodul fließt,

wobei das Submodul (20) weiter in einen oder mehrere der folgenden vier ansteuerbaren Energieabgabe- oder -aufnahmezustände geschaltet wird, in denen jeweils die steuerbare Schalteinrichtung des ersten Speicherzweipols (50) den genannten zweiten Schaltzustand einnimmt, und

1. die Spannung zwischen dem zweiten und dem ersten Submodulanschluss (X2, X1) positiv ist und der Speicher (9, 9.1, 9.2) des ersten Speicherzweipols (50) geladen wird, oder
2. die Spannung zwischen dem zweiten und dem ersten Submodulanschluss (X2, X1) positiv ist und der Speicher (9, 9.1, 9.2) des ersten Speicherzweipols (50) entladen wird, oder

3. die Spannung zwischen dem zweiten und dem ersten Submodulanschluss (X2, X1) negativ ist und der Speicher (9, 9.1, 9.2) des ersten Speicherzweipols (50) entladen wird, oder

4. die Spannung zwischen dem zweiten und dem ersten Submodulanschluss (X2, X1) negativ ist und der Speicher (9, 9.1, 9.2) des ersten Speicherzweipols (50) geladen wird.

**Claims**

1. A module (20) comprising:

   - first and second module terminals (X1, X2),
   - a first, a second, a third and a fourth controllable switch (10, 30, 10a, 30a), and
   - a first storage two-pole (50), which comprises a first and a second two-pole terminal (Y1, Y2), an energy store (9, 9.1, 9.2) and a controllable switching device, wherein the controllable switching device

     • comprises a first controllable switching state, in which the first storage two-pole (50) does not output any energy independently of a voltage which is present between the first and the second storage two-pole terminal (Y1, Y2), and
     • comprises a second controllable switching state, in which the store (9, 9.1, 9.2) of the storage two-pole (50) can receive or output energy,

   wherein the module (20) as a whole has a controllable conduction state, in which

     - the controllable switching device of the first storage two-pole (50) assumes said first switching state, and
     - the first to fourth switches (10, 30, 10a, 30a) are connected such that a current flows through the module (20) on two parallel branches,

   wherein the module (20) further has one or more of the following four controllable power output or receiving states, in each of which the controllable switching device of the first storage two-pole (50) assumes said second switching state, and

     1. the voltage between the second and first module terminals (X2, X1) is positive and the storage (9, 9.1, 9.2) of the first storage two-pole (50) is charged, or
     2. the voltage between the second and first module terminals (X2, X1) is positive and the storage (9, 9.1, 9.2) of the first storage two-pole (50) is discharged, or
     3. the voltage between the second and first module terminals (X2, X1) is negative and the storage (9, 9.1, 9.2) of the first storage two-pole (50) is discharged, or
     4. the voltage between the second and first module terminals (X2, X1) is negative and the storage (9, 9.1, 9.2) of the first storage two-pole (50) is charged.

2. The module (20) of claim 1, further comprising:

   a fifth, a sixth, a seventh and an eighth controllable switch (10L, 30L, 10al, seal), wherein the fifth controllable switch is connected directly in parallel to said fourth switch and can optionally be omitted, and
   a second storage two-pole (50L), which comprises a first and a second two-pole terminal (Y1, Y2), an energy store (9, 9.1, 9.2) and a controllable switching device, wherein the controllable switching device

     • comprises a first controllable switching state, in which the second storage two-pole (50L) does not output any energy independently of a voltage which is present between its first and its second storage two-pole terminal (Y1, Y2), and
     • comprises a second controllable switching state, in which the store (9, 9.1, 9.2) of the second storage two-pole (50L) can receive or output energy,

   wherein the module (20) as a whole has a controllable conduction state, in which

     - the controllable switching device of the first and the second storage two-pole (50R, 50L) assumes said first switching state, and

- the first to eighth switches (10, 30, 10a, 30a) are connected such that a current flows through the module on two parallel branches.

3. A converter (1) comprising a plurality of controllable two-pole sub-modules (20) connected in series,

   wherein at least part of said sub-modules (20) are formed by modules according to claim 1, and have a first and a second sub-module terminal (X1, X2) formed by the first and the second module terminals (X1, X2) of the module of claim 1,
   wherein the converter (1) further comprises a control unit (60) adapted to control the switches (10, 30, 10a, 30a) and the switching device of the first storage two-pole (50) of sub-modules, wherein the control unit (60) is adapted to selectively switch selected sub-modules (20) into the conduction state.

4. The converter (1) according to claim 3, having a multi-level converter structure.

5. The converter (1) according to one of claims 3 or 4, wherein the first and the second switch (10, 30) are connected in series, the third and the fourth switch (10a, 30a) are connected in series, and the series connection of the first and the second switch (10, 30), the series connection of the third and the fourth switch (10a, 30a) and the first storage two-pole (50) are connected in parallel, wherein preferably
   a potential point between the first and the second switch (10, 30) is connected to the first sub-module terminal (X1) and a potential point between the third and the fourth switch (10a, 30a) is connected to the second sub-module terminal (X2).

6. The converter (1) according to claim 5, wherein the first and the second switch (10, 30) are oriented in the same direction with respect to their forward direction and the third and the fourth switch (10a, 30a) are oriented in the same direction with respect to their forward direction, wherein
   the first and the second switch (10, 30) are oriented with respect to their forward direction in the mesh circulation direction preferably in opposite directions to the third and the fourth switch (10a, 30a).

7. The converter (1) according to any one of the preceding claims, wherein at least part of said sub-modules (20) are formed by modules according to claim 2.

8. The converter (1) according to claim 7, wherein the fifth and the sixth switch (10L, 30L) are connected in series, the seventh and the eighth switch (10al, 30al) are connected in series, and the series connection of the fifth and the sixth switch (10L, 30L), the series connection of the seventh and the eighth switch (10al, 30al) and the second storage two-pole (50L) are connected in parallel, and/or

   wherein a potential point between the first and the second switch (10R, 30R) is connected to the first sub-module terminal (X1), a potential point (W) between the third and the fourth switch (10al, 30al) is connected to the first terminal (Y1) of the second storage two-pole (50L),
   a potential point (V) between the fifth and the sixth switch (10L, 30L) is connected to the second terminal (Y2) of the first storage two-pole (50R),
   and a potential point between the seventh and the eighth switch (10al, 30al) is connected to the second sub-module terminal (X2).

9. The converter (1) according to one of claims 7 or 8, wherein the fifth and the sixth switch (10L, 30L) are oriented in the same direction with respect to their forward direction and the seventh and the eighth switch (10al, 30al) are oriented in the same direction with respect to their forward direction, wherein
   the fifth and the sixth switch (10L, 30L) are oriented with respect to their forward direction in a closed mesh circulation preferably in opposite directions to the seventh and the eighth switch (10al, 30al).

10. The converter (1) according to any one of claims 3 to 9, wherein one or more of the first to fourth or first to eighth switches (10, 30, 10a, 30a) are formed by power semiconductors, in particular by IGBTs or thyristors, in particular GTO thyristors.

11. The converter (1) according to any one of claims 3 to 10, wherein one or more of the first to fourth or first to eighth switches (10, 30, 10a, 30a) are formed by reverse-conducting power semiconductors, and/or
    wherein one or more of the first to fourth or first to eighth switches (10, 30, 10a, 30a) have a free-wheeling diode connected in parallel in opposite directions.

**12.** The converter (1) according to any one of claims 3 to 11, wherein the control unit (60) is adapted to conductively switch a switch even in switching states in which a current flow is opposite to this switch, and/or
wherein the converter comprises a plurality of branches of sub-modules (20) connected in series, wherein each branch comprises at least 3, preferably at least 6 of said sub-modules.

**13.** The converter (1) according to any one of the preceding claims, wherein the store (9, 9.1, 9.2) of the first and/or second storage two-pole (50) comprises at least one capacitor, in particular a unipolar capacitor, wherein

the first and/or the second storage two-pole (50) preferably comprise(s) at least two capacitors (9.1, 9.2) connected in series or connectable in series, wherein
the at least two capacitors (9.1, 9.2) are preferably connectable in parallel for charging and in series for discharging.

**14.** The converter (1) according to any one of claims 3 to 13, wherein the switching device of the first and/or the second storage two-pole (50) comprises at least one semiconductor switch (15.1, 15.2, 15.3, 15.4), the percentage power loss of which is lower than that of the first to fourth switches (10, 30, 10a, 30a), and/or

wherein the switching device of the first and/or the second storage two-pole (50) comprises at least one SiC switch or at least one GaN switch (15.1, 15.2, 15.3, 15.4), and/or
wherein the switching device of the first and/or the second storage two-pole (50) comprises a plurality of semiconductor switches (15.1, 15.2, 15.3, 15.4) connected in series.

**15.** A method for controlling a converter (1) comprising a plurality of controllable sub-modules (20) connected in series, wherein at least part of said sub-modules (20) each comprise:

- a first and a second sub-module terminal (X1, X2),
- a first, a second, a third and a fourth controllable switch (10, 30, 10a, 30a), and
- a storage two-pole (50), which comprises a first and a second two-pole terminal (Y1, Y2), an energy store (9, 9.1, 9.2) and a controllable switching device, wherein the controllable switching device

• comprises a first controllable switching state, in which the storage two-pole (50) does not output any energy independently of a voltage which is present between the first and the second storage two-pole terminal (Y1, Y2), and
• comprises a second controllable switching state, in which the store (9, 9.1, 9.2) of the storage two-pole (50) can receive or output energy,

wherein the switches (10, 30, 10a, 30a) and the switching device of the storage two-pole (50) of at least one sub-module (20) are at least temporarily switched into a controllable conduction state, in which

- the controllable switching device of the storage two-pole (50) assumes said first switching state, and
- the first to fourth switches (10, 30, 10a, 30a) are connected such that a current flows through the sub-module on two parallel branches,

wherein the sub-module (20) is further switched into one or more of the following four controllable power output or receiving states, in each of which the controllable switching device of the first storage two-pole (50) assumes said second switching state, and

1. the voltage between the second and first sub-module terminals (X2, X1) is positive and the storage (9, 9.1, 9.2) of the first storage two-pole (50) is charged, or
2. the voltage between the second and first sub-module terminals (X2, X1) is positive and the storage (9, 9.1, 9.2) of the first storage two-pole (50) is discharged, or
3. the voltage between the second and first sub-module terminals (X2, X1) is negative and the storage (9, 9.1, 9.2) of the first storage two-pole (50) is discharged, or
4. the voltage between the second and first sub-module terminals (X2, X1) is negative and the storage (9, 9.1, 9.2) of the first storage two-pole (50) is charged.

**Revendications**

1. Module (20), qui comprend ce qui suit :

   - une première et une deuxième bornes de module (X1, X2),
   - un premier, un deuxième, un troisième et un quatrième interrupteurs contrôlables (10, 30, 10a, 30a) et
   - un premier bipôle de stockage (50), qui comprend une première et une deuxième bornes de bipôle (Y1, Y2), un dispositif de stockage d'énergie (9, 9.1, 9.2) et un dispositif de commutation contrôlable, dans lequel le dispositif de commutation contrôlable

      • présente un premier état de commutation contrôlable dans lequel le premier bipôle de stockage (50) ne produit aucune énergie, indépendamment d'une tension appliquée entre les première et deuxième bornes du bipôle de stockage (Y1, Y2) et
      • présente un deuxième état de commutation contrôlable dans lequel le dispositif de stockage (9, 9.1, 9.2) du bipôle de stockage (50) peut consommer ou produire de l'énergie,

   dans lequel le module (20) dans son ensemble présente un état de conduction contrôlable dans lequel

      - le dispositif de commutation contrôlable du premier bipôle de stockage (50) prend le premier état de commutation mentionné et
      - les premier à quatrième interrupteurs (10, 30, 10a, 30a) sont branchés de façon à ce qu'un courant s'écoule à travers le module (20) sur deux branches parallèles,

   dans lequel le module (20) présente en outre un ou plusieurs des quatre états de consommation ou de production d'énergie contrôlables suivants, dans lesquels le dispositif de commutation contrôlable du premier bipôle de stockage (50) prend le deuxième état de commutation mentionné et

      1. la tension entre la deuxième et la première borne de module (X2, X1) est positive et le dispositif de stockage (9, 9.1, 9.2) du premier bipôle de stockage (50) est chargé ou
      2. la tension entre la deuxième et la première borne de module (X2, X1) est positive et le dispositif de stockage (9, 9.1, 9.2) du premier bipôle de stockage (50) est déchargé ou
      3. la tension entre la deuxième et la première borne de module (X2, X1) est négative et le dispositif de stockage (9, 9.1, 9.2) du premier bipôle de stockage (50) est déchargé ou
      4. la tension entre la deuxième et la première borne de module (X2, X1) est négative et le dispositif de stockage (9, 9.1, 9.2) du premier bipôle de stockage (50) est chargé.

2. Module (20) selon la revendication 1, qui comprend en outre ce qui suit :

   un cinquième, un sixième, un septième et un huitième interrupteurs contrôlables (10L, 30L, 10aL, 30aL), dans lequel le cinquième interrupteur contrôlable est branché en parallèle directement avec le quatrième interrupteur mentionné et peut, en option, être supprimé, et
   un deuxième bipôle de stockage (50L) qui comprend une première et une deuxième bornes de bipôle (Y1, Y2), un dispositif de stockage d'énergie (9, 9.1, 9.2) et un dispositif de commutation contrôlable, dans lequel le dispositif de commutation contrôlable

      • présente un premier état de commutation contrôlable dans lequel le deuxième bipôle de stockage (50L) ne délivre aucune énergie, indépendamment d'une tension appliquée entre les première et deuxième bornes du bipôle de stockage (Y1, Y2) et
      • présente un deuxième état de commutation contrôlable dans lequel le dispositif de stockage (9, 9.1, 9.2) du deuxième bipôle de stockage (50L) peut consommer ou produire de l'énergie,

   dans lequel le module (20) dans son ensemble présente dans lequel

      - le dispositif de commutation contrôlable du premier et du deuxième bipôle de stockage (50R, 50L) prennent le premier état de commutation mentionné et
      - les premier à huitième interrupteurs (10, 30, 10a, 30a) sont branchés de façon à ce qu'un courant s'écoule à travers le module sur deux branches parallèles.

3. Convertisseur (1) comprenant une pluralité de sous-modules bipolaires contrôlables (20) branchés en série,

   dans lequel au moins une partie des sous-modules (20) mentionnés sont constitués de modules selon la revendication 1, et comprennent une première et une deuxième bornes de sous-module (X1, X2) qui sont constitués des première et deuxième bornes de module (X1, X2) du module selon la revendication 1,
   dans lequel le convertisseur (1) comprend en outre une unité de commande (60) qui est conçue pour le contrôle des interrupteurs (10, 30, 10a, 30a) et du dispositif de commutation du premier bipôle de stockage (50) des sous-modules, dans lequel l'unité de commande (60) est conçue pour commuter des sous-modules (20) sélectionnés dans l'état de conduction.

4. Convertisseur (1) selon la revendication 3, qui présente une structure de convertisseur multi-niveaux.

5. Convertisseur (1) selon l'une des revendications 3 ou 4, dans lequel les premier et deuxième interrupteurs (10, 30) sont branchés à en série, les troisième et quatrième interrupteurs (10a, 30a) sont branchés en série et le circuit en série constitué des premier et deuxième interrupteurs (10, 30), le circuit en série constitué des troisième et quatrième interrupteurs (10a, 30a) et le premier bipôle de stockage (50) sont branchés en parallèle, dans lequel, de préférence, un point de potentiel entre les premier et deuxième interrupteurs (10, 30) est relié avec la première borne de sous-module (X1) et un point de potentiel entre les troisième et quatrième interrupteurs (10a, 30a) est relié avec la deuxième borne de sous-module (X2).

6. Convertisseur (1) selon la revendication 5, dans lequel les premier et deuxième interrupteurs (10, 30) sont orientés dans le même sens en ce qui concerne leur sens de conduction et les troisième et quatrième interrupteurs (10a, 30a) sont orientés dans le même sens en ce qui concerne leur sens de conduction, dans lequel
   les premier et deuxième interrupteurs (10, 30) sont orientés, en ce qui concerne leur sens de conduction, dans le sens des mailles, de préférence dans le même sens que les troisième et quatrième interrupteurs (10a, 30a).

7. Convertisseur (1) selon l'une des revendications précédentes, dans lequel au moins une partie des sous-modules (20) mentionnés sont constitués de modules selon la revendication 2.

8. Convertisseur (1) selon la revendication 7, dans lequel les cinquième et sixième interrupteurs (10L, 30L) sont branchés en série, les septième et huitième interrupteurs (10aL, 30aL) sont branchés et série et le circuit en série constitué des cinquième et sixième interrupteurs (10L, 30L), le circuit en série constitué des septième et huitième interrupteurs (10aL, 30aL) et le deuxième bipôle de stockage (50L) sont branchés en parallèle et/ou

   dans lequel un point de potentiel entre les premier et deuxième interrupteurs (10R, 30R) est relié avec la première borne de sous-module (X1), un point de potentiel (W) entre les troisième et quatrième interrupteurs (10aR, 30aR) est relié avec la première borne (Y1) du deuxième bipôle de stockage (50L),
   un point de potentiel (V) entre les cinquième et sixième interrupteurs (10L, 30L) est relié avec la deuxième borne (Y2) du premier bipôle de stockage (50R),
   et un point de potentiel entre les septième et huitième interrupteurs (10aL, 30aL) est relié avec la deuxième borne de sous-module (X2).

9. Convertisseur (1) selon l'une des revendications 7 ou 8, dans lequel les cinquième et sixième interrupteurs (10L, 30L) sont orientés dans le même sens en ce qui concerne leur sens de conduction et les septième et huitième interrupteurs (10aL, 30aL) sont orientés dans le même sens en ce qui concerne leur sens de conduction, dans lequel les cinquième et sixième interrupteurs (10L, 30L) sont orientés de préférence dans le même sens en ce qui concerne leur sens de conduction dans une circulation de maille fermée avec les septième et huitième interrupteurs (10aL, 30aL).

10. Convertisseur (1) selon l'une des revendications 3 à 9, dans lequel un ou plusieurs des premier à quatrième ou premier à huitième interrupteurs (10, 30, 10a, 30a) est constitué de semi-conducteurs de puissance, plus particulièrement d'IGBT ou de thyristors, plys particulièrement de thyristors GTO.

11. Convertisseur (1) selon l'une des revendications 3 à 10, dans lequel un ou plusieurs des premier à quatrième ou premier à huitième interrupteurs (10, 30, 10a, 30a) est constitué de semi-conducteurs de puissance à conduction inversée et/ou
   dans lequel un ou plusieurs des premier à quatrième ou premier à huitième interrupteurs (10, 30, 10a, 30a) comprennent un diode de roue libre branchée en parallèle à contresens.

**12.** Convertisseur (1) selon l'une des revendications 3 à 11, dans lequel l'unité de commande (60) est conçue pour commuter un interrupteur dans un état conducteur également dans des états de commutation dans lesquels un flux de courant est à contre sens par rapport à cet interrupteur et/ou

dans lequel le convertisseur comprend plusieurs branches constituées de sous-modules (20) branchés en série, dans lequel chaque branche comprend au moins 3, de préférence au moins 6, des sous-modules mentionnés.

**13.** Convertisseur (1) selon l'une des revendications précédentes, dans lequel le dispositif de stockage (9, 9.1, 9.2) du premier et/ou du deuxième bipôle de stockage (50) comprend au moins un condensateur, plus particulièrement un condensateur unipolaire, dans lequel

le premier et/ou le deuxième bipôle de stockage (50) contiennent de préférence au moins deux condensateurs (9.1, 9.2), qui sont branchés en série ou peuvent être branchés en série, dans lequel les au moins deux condensateurs (9.1, 9.2) peuvent être branchés de préférence en parallèle pour la charge et en série pour la décharge.

**14.** Convertisseur (1) selon l'une des revendications 3 à 13, dans lequel le dispositif de commutation du premier et/ou du deuxième bipôle de stockage (50) comprend au moins un interrupteur semi-conducteur (15.1, 15.2, 15.3, 15.4) dont la puissance de perte en pourcentage est inférieure à celle des premier à quatrième interrupteurs (10, 30, 10a, 30a) et/ou

dans lequel le dispositif de commutation du premier et/ou du deuxième bipôle (50) comprend au moins un interrupteur SiC ou au moins un interrupteur GaN (15.1, 15.2, 15.3, 15.4) et/ou dans lequel le dispositif de commutation du premier et/ou du deuxième bipôle de stockage (50) contient une pluralité d'interrupteurs semi-conducteurs (15.1, 15.2, 15.3, 15.4) branchés en série.

**15.** Procédé de contrôle d'un convertisseur (1), qui contient une pluralité de sous-modules contrôlables (20) branchés en série, dans lequel au moins une partie des sous-modules (20) mentionnés comprend ce qui suit :

- une première et une deuxième bornes de module (X1, X2),
- un premier, un deuxième, un troisième et un quatrième interrupteurs contrôlables (10, 30, 10a, 30a) et
- un bipôle de stockage (50), qui comprend une première et une deuxième bornes de bipôle (Y1, Y2), un dispositif de stockage d'énergie (9, 9.1, 9.2) et un dispositif de commutation contrôlable, dans lequel le dispositif de commutation contrôlable

• présente un premier état de commutation contrôlable dans lequel le bipôle de stockage (50) ne produit aucune énergie, indépendamment d'une tension appliquée entre les première et deuxième bornes du bipôle de stockage (Y1, Y2) et
• présente un deuxième état de commutation contrôlable dans lequel le dispositif de stockage (9, 9.1, 9.2) du bipôle de stockage (50) peut consommer ou produire de l'énergie,

dans lequel les interrupteurs (10, 30, 10a, 30a) et le dispositif de commutation du bipôle de stockage (50) d'au moins un sous-module (20) sont commutés au moins provisoirement dans un état de conduction contrôlable dans lequel

- le dispositif de commutation contrôlable du premier bipôle de stockage (50) prend le premier état de commutation mentionné et
- les premier à quatrième interrupteurs (10, 30, 10a, 30a) sont branchés de façon à ce qu'un courant s'écoule à travers le module (20) sur deux branches parallèles,

dans lequel le module (20) présente en outre un ou plusieurs des quatre états de consommation ou de production d'énergie contrôlables suivants, dans lesquels le dispositif de commutation contrôlable du premier bipôle de stockage (50) prend le deuxième état de commutation mentionné et

1. la tension entre la deuxième et la première borne de module (X2, X1) est positive et le dispositif de stockage (9, 9.1, 9.2) du premier bipôle de stockage (50) est chargé ou
2. la tension entre la deuxième et la première borne de module (X2, X1) est positive et le dispositif de stockage (9, 9.1, 9.2) du premier bipôle de stockage (50) est déchargé ou
3. la tension entre la deuxième et la première borne de module (X2, X1) est négative et le dispositif de stockage (9, 9.1, 9.2) du premier bipôle de stockage (50) est déchargé ou

4. la tension entre la deuxième et la première borne de module (X2, X1) est négative et le dispositif de stockage (9, 9.1, 9.2) du premier bipôle de stockage (50) est chargé.

Fig. 1

Fig. 2

Fig. 3

Fig. 4

Fig. 5

29

$U_x$

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10103031 A1
- DE 102009057288 A1
- DE 102009057288
- DE 102013205562
- DE 102010008978 A1

**In der Beschreibung aufgeführte Nicht-Patentliteratur**

- Modeling and Design of Modular Multilevel Converters for Grid Applications. **K. ILVES.** Doctoral thesis. KTH Royal Institute of Technology
- Leistungselektronische Schaltungen. Springer Vieweg-Verlag, 748